# EUROPEAN PATENT SPECIFICATION

(11) **EP 4 191 967 B1**
(45) Date of publication and mention of the grant of the patent: **25.02.2026**
(21) Application number: 20948288.4
(22) Date of filing: 06.08.2020
(51) Int. Cl.: H04L 45/74, H04L 9/40, G06F 9/54

(54) **APPLICATION PROGRAMMING INTERFACE INVOKING METHOD, AND DEVICE AND SYSTEM THEREOF**
AUFRUFVERFAHREN FÜR ANWENDUNGSPROGRAMMIERSCHNITTSTELLE SOWIE VORRICHTUNG UND SYSTEM DAFÜR
PROCÉDÉ D'APPEL D'INTERFACE DE PROGRAMMATION D'APPLICATION, AINSI QUE DISPOSITIF ET SYSTÈME ASSOCIÉS

(43) Date of publication of application: 07.06.2023
(73) Proprietor: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Isarpatent
(86) International application number: PCT/CN2020/107587
(87) International publication number: WO 2022/027528

(56) References cited:
- WO-A1-2020/071887
- CN-A- 103 973 642
- CN-A- 105 187 372
- CN-A- 106 295 330
- CN-A- 111 339 524
- CN-A- 111 373 712
- CN-A- 111 435 924
- US-A1- 2016 205 091
- US-A1- 2019 036 934
- "3 rd Generation Partnership Project; Technical Specification Group Services and System Aspects; Study on application architecture for enabling Edge Applications; (Release 17)", 6 December 2019 (2019-12-06), XP051838282, Retrieved from the Internet <URL:https://ftp.3gpp.org/tsg_sa/TSG_SA/TSGS_86/Docs/SP-191103.zip 23758-200_rm.docx> [retrieved on 20191206]

## Description

### TECHNICAL FIELD

This disclosure relates to the field of communication technologies, and the invention in particular, relates to a method for invoking an application programming interface.

### BACKGROUND

Many features involving invocation of an application programming interface (application programming interface, API) are defined in the 3^{rd} generation partnership project (3rd generation partnership project, 3GPP). For example, as specified in clause 5.20 of 3GPP TS 23.501, an API invoking network element may invoke an API exposed by an API providing network element, to enable a 3GPP service to be connected to an external application function. For example, a third-party application function (application function, AF) network element may request the API providing network element to invoke the API to obtain a corresponding service.

In some scenarios, the API providing network element may provide the AF network element with some APIs for operating information of a terminal device, for example, an API for a location service (requesting to read location information of the terminal device). The AF network element may read/modify/add/delete the information of the terminal device by invoking the APIs exposed by the API providing network element. The information, for example, the location information or an identifier (identifier, ID) of the terminal device, may involve privacy.

In a process in which the AF network element invokes the API, mutual authentication is performed between the API providing network element and the AF network element. If the authentication succeeds, the AF network element may operate the information of the terminal device by invoking the API. In this process, because whether a user authorizes the AF network element to perform a corresponding operation is not considered, the information of the terminal device may be leaked, resulting in security risks.

The 3GPP standard document: "Study on application architecture for enabling edge applications; (Release 17)"; 3GPP DRAFT; SP-191103, 3RD GENERATION PARTNERSHIP PROJECT (3GPP), MOBILE COMPTENCE CENTRE; 650, ROUTES DES LUCIOLES; F-06921 SOPHIA-ANTIPOLIS CEDEX; FRANCE, 6 DECEMBER 2019 (2019-12-06), XP051838282 relates to a study on application architecture for enabling edge applications. An edge enabler server receives a location reporting API request from an edge application server in order to support tracking or checking valid location of user terminal. The edge application server request comprises a UE identifier and location granularity. Further, the edge application server is authorized to discover and use location reporting API.

US 2019/036934 A1 relates to a system and method for providing access to an email server. The system comprises an identity management server and a management server at which a user device is enrolled. The management server receives communication from the email server. The communication includes information regarding a request for access to the email server from the user device. The identity management server sends a request for authorization to access the email server to a management server at which the user device is enrolled. The management server determines whether the user device is authorized to access the email server. In response to determining that the user device is authorized to access the email server, the management server sends an authentication token to the user device, and sends, to the email server, an instruction to provide the user device with access to the email server.

WO 2020/071887 A1 relates to a device performing method for a network exposure function (NEF) in a communication system. The device comprises a transceiver and a controller. The transceiver transmits or receives a signal to or from an internal or external network entity. The controller receives a request message from a server. The request message includes request information related to service-specific information. Further, the controller changes data in a unified data repository (UDR) based on the request message. The controller performs provisioning of the changed data to user equipment (UE) via a policy control function (PCF).

### SUMMARY

The object of the present invention is to provide a method and system for invoking an application programming interface, and an apparatus, to lower a leakage risk of information of a terminal device, thereby improving information security. This object is solved by the attached independent claims, and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the claimed invention or its embodiments.

A first aspect of the invention, the invention provides a method for invoking an API, which may be applied to a scenario in which an application invokes an API by using a mobile network. The method may be performed by an API providing network element, or may be performed by an apparatus (for example, a processor or a chip) in an API providing network element. An example in which the method is performed by an API providing network element is used, and the method includes the following content.

The API providing network element receives an API invoking request for a target application from an application server, where the API invoking request is for requesting to operate information of a terminal device, and the API invoking request includes a first identifier of the terminal device and an identifier of the target application on the application server side; obtains an authorization result based on the first identifier of the terminal device and the identifier of the target application on the application server side, where the authorization result indicates whether the application server is allowed to operate the information of the terminal device; and determines, based on the authorization result, whether to allow the application server to operate the information of the terminal device.

According to the first aspect of this not-claimed application, the API invoking request for the target application from the application server carries the first identifier of the terminal device, so that the API providing network element determines, based on the first identifier of the terminal device, whether the request from the application server to operate the information of the terminal device is authorized by the terminal device, thereby lowering a leakage risk of the information of the terminal device, and improving information security.

According to the invention, the API providing network element sends an authorization request to a permission storage network element, where the authorization request includes a second identifier of the terminal device, an identifier of the target application on a mobile network side, and operation indication information indicating the operation on the information of the terminal device; and receives an authorization response from the permission storage network element, where the authorization response includes the authorization result. This is, the API providing network element directly obtains the authorization result from the permission storage network element, and the authorization result directly indicates whether the application server is allowed to operate the information of the terminal device. This implementation is simple to implement and can reduce processing load of the API providing network element.

In a possible implementation, the API providing network element sends the authorization request to the permission storage network element, where the authorization request includes the second identifier of the terminal device; receives the authorization response from the permission storage network element, where the authorization response includes permissions of all applications corresponding to the terminal device on the mobile network side; and determines the authorization result based on the identifier of the target application on the application server side, the permissions of all the applications corresponding to the terminal device on the mobile network side, and the operation indication information indicating the operation on the information of the terminal device. In this implementation, the API providing network element obtains, from the permission storage network element, the permissions of all the applications corresponding to the terminal device on the mobile network side based on the second identifier of the terminal device, and autonomously determines, based on the identifier of the target application on the application server side, the permissions of all the applications corresponding to the terminal device on the mobile network side, and the operation indication information, whether to allow the application server to operate the information of the terminal device, to obtain the authorization result. This implementation can improve an autonomous determining capability of the API providing network element.

In a possible implementation, the API providing network element sends the authorization request to the permission storage network element, where the authorization request includes the identifier of the target application on the mobile network side; receives the authorization response from the permission storage network element, where the authorization response includes permissions of all terminal devices corresponding to the target application on the mobile network side; and determines the authorization result based on the first identifier of the terminal device, the permissions of all the terminal devices corresponding to the target application on the mobile network side, and the operation indication information indicating the operation on the information of the terminal device. In this implementation, the API providing network element obtains, from the permission storage network element, the permissions of all the terminal devices corresponding to the target application on the mobile network side based on the identifier of the target application on the mobile network side, and autonomously determines, based on the first identifier of the terminal device, the permissions of all the terminal devices corresponding to the target application on the mobile network side, and the operation indication information, whether to allow the application server to operate the information of the terminal device, to obtain the authorization result. This implementation can improve the autonomous determining capability of the API providing network element.

In a possible implementation, the API providing network element sends the authorization request to the permission storage network element, where the authorization request includes the second identifier of the terminal device and the identifier of the target application on the mobile network side; receives the authorization response from the permission storage network element, where the authorization response includes the permission of the target application of the terminal device on the mobile network side; and determines the authorization result based on the permission of the target application of the terminal device on the mobile network side and the operation indication information indicating the operation on the information of the terminal device. In this implementation, the API providing network element obtains, from the permission storage network element, the permission of the target application of the terminal device on the mobile network side based on the second identifier of the terminal device and the identifier of the target application on the mobile network side, and autonomously determines, based on the permission of the target application of the terminal device on the mobile network side and the operation indication information, whether to allow the application server to operate the information of the terminal device, to obtain the authorization result. This implementation can improve the autonomous determining capability of the API providing network element.

In the foregoing several not-claimed implementations, if the first identifier of the terminal device is different from the second identifier of the terminal device, the API providing network element may convert the first identifier of the terminal device into the second identifier of the terminal device. If the identifier of the target application on the terminal device side is different from the identifier of the target application on the mobile network side, the API providing network element may convert the identifier of the target application on the terminal device side into the identifier of the target application on the mobile network side.

In a possible implementation, if the application server is allowed to perform the operation on the information of the terminal device, the API providing network element sends an API invoking response to the application server. The API invoking response indicates that the API invoking request is successfully performed, so that the application server learns that the request to operate the information of the terminal device is authorized.

In a possible implementation, if the application server is forbidden to perform the operation on the information of the terminal device, the API providing network element sends an API invoking response to the application server. The API invoking response indicates that the API invoking request is rejected, to notify the application server that the API invoking fails to be performed.

In a possible implementation, the API invoking response includes a rejection cause. The rejection cause indicates that the operation requested by the application server fails to be authorized, so that the application server learns that the requested operation fails to be authorized.

In a possible implementation, the API providing network element sends a permission request message to an access and mobility management function network element, where the permission request message includes the second identifier of the terminal device and the identifier of the target application on the mobile network side; receives a permission response message from the access and mobility management function network element, where the permission response message includes the permission of the target application of the terminal device on the mobile network side; and determines, based on the permission of the target application of the terminal device on the mobile network side and the operation indication information, whether to allow the application server to perform the operation on the information of the terminal device, where the operation indication information indicates the operation on the information of the terminal device. In this implementation, the API providing network element triggers the access and mobility management function network element to obtain the permission of the target application on the mobile network side, to determine whether to allow the application server to operate the information of the terminal device, so that the leakage risk of the information of the terminal device can be lowered, thereby improving the information security.

In a possible not-claimed implementation, the operation indication information in the foregoing several implementations is determined based on the API invoking request, for example, based on a specific API function of the API invoking request.

In a possible not-claimed implementation, the API invoking request includes a processing operation indication, and the API providing network element determines the operation indication information based on a processing operation request.

A second aspect of invention, the invention provides a method for invoking an API, which may be applied to a scenario in which an application invokes an API by using a mobile network. The method may be performed by a permission storage network element, or may be performed by an apparatus (for example, a processor or a chip) in a permission storage network element. An example in which the method is performed by a permission storage network element is used, and the method includes the following content.

The permission storage network element receives an authorization request from an API providing network element, where the authorization request includes a second identifier of a terminal device, an identifier of a target application on a mobile network side, and operation indication information indicating an operation on information of the terminal device, the authorization request is for requesting an authorization result, and the authorization result indicates whether the application server is allowed to perform the operation on the information of the terminal device; obtains the authorization result based on the authorization request and storage permission information, where the storage permission information includes a permission of the target application of the terminal device on the mobile network side; and sends an authorization response to the API providing network element, where the authorization response includes the authorization result.

According to the second aspect of this not-claimed application, the permission storage network element directly provides, for the API providing network element, the authorization result for indicating whether the application server is allowed to perform the operation on the information of the terminal device. The API providing network element may directly determine, based on the authorization result, whether to allow the application server to perform the operation on the information of the terminal device, which is simple to implement and can lower a leakage risk of the information of the terminal device, thereby improving information security.

According to the invention, the permission storage network element receives a subscription update message including the second identifier of the terminal device, the identifier of the target application on the mobile network side, and the permission of the target application on the mobile network side; and stores the second identifier of the terminal device, the identifier of the target application on the mobile network side, and the permission of the target application on the mobile network side into the storage permission information, so that the permission storage network element can obtain the authorization result based on the authorization request and the storage permission information when receiving the authorization request.

The subscription update message may be from an access and mobility management function network element or an authorization server.

In a possible not-claimed implementation, the authorization request includes the second identifier of the terminal device. The permission storage network element obtains permissions of all applications corresponding to the terminal device on the mobile network side based on the second identifier of the terminal device, and sends the authorization response to the API providing network element. The authorization response includes the permissions of all the applications corresponding to the terminal device on the mobile network side. The API providing network element autonomously determines, based on an identifier of the target application on an application server side and the permissions of all the applications corresponding to the terminal device on the mobile network side, whether to allow the application server to operate the information of the terminal device.

In a possible not-claimed implementation, the authorization request includes the identifier of the target application on the mobile network side. The permission storage network element obtains permissions of all terminal devices corresponding to the target application on the mobile network side based on the identifier of the target application on the mobile network side, and sends an authorization response to the API providing network element. The authorization response includes the permissions of all the terminal devices corresponding to the target application on the mobile network side. The API providing network element autonomously determines, based on the permissions of all the terminal devices corresponding to the target application on the mobile network side and a first identifier of the terminal device, whether to allow the application server to operate the information of the terminal device.

In a possible not-claimed implementation, the authorization request includes the second identifier of the terminal device and the identifier of the target application on the mobile network side. The permission storage network element obtains the permission of the target application of the terminal device on the mobile network side based on the second identifier of the terminal device and the identifier of the target application on the mobile network side, and sends an authorization response to the API providing network element. The authorization response includes the permission of the target application of the terminal device on the mobile network side. The API providing network element autonomously determines, based on the permission of the target application of the terminal device on the mobile network side, whether to allow the application server to operate the information of the terminal device.

A third aspect of this not-claimed application provides a method for invoking an API, which may be applied to a scenario in which an application invokes an API by using a mobile network. The method may be performed by a terminal device, or may be performed by an apparatus (for example, a processor or a chip) in a terminal device. An example in which the method is performed by a terminal device is used, and the method includes the following content.

The terminal device determines a permission of a target application on a terminal side; converts an identifier of the target application on the terminal side into an identifier of the target application on a mobile network side and converts the permission of the target application on the terminal side into a permission of the target application on the mobile network side; and sends an uplink non-access stratum NAS message to an access and mobility management function network element. The uplink NAS message includes a second identifier of the terminal device, the identifier of the target application on the mobile network side, and the permission of the target application on the mobile network side.

According to the third aspect of this not-claimed application, the terminal device sends the permission of the target application on the mobile network side and the identifier of the target application on the mobile network side to the access and mobility management function network element, to enable the access and mobility management function network element to update the permission of the target application of the terminal device on the mobile network side, thereby further enabling the permission storage network element to update the permission of the target application of the terminal device on the mobile network side.

In a possible not-claimed implementation, the terminal device converts the first identifier of the terminal device into the second identifier of the terminal device, so that the mobile network side can identify the first identifier of the terminal device.

In a possible not-claimed implementation, when receiving a downlink NAS message from the access and mobility management function network element, the terminal device determines a permission of the target application on a terminal device side. The downlink NAS message includes the identifier of the target application on the mobile network side.

A fourth aspect of the invention, the invention provides a method for invoking an API, which may be applied to a scenario in which an application invokes an API by using a mobile network. The method may be performed by an application server, or may be performed by an apparatus (for example, a processor or a chip) in an application server. An example in which the method is performed by an application server is used, and the method includes the following content.

The application server sends an API invoking request for a target application to an API providing network element, where the API invoking request is for requesting to operate information of a terminal device, and the API invoking request includes a first identifier of the terminal device and an identifier of a target application on an application server side; and receives an API invoking response from the API providing network element, where the API invoking response indicates that the API invoking request is successfully performed or is rejected.

According to the fourth aspect of this not-claimed application, the API invoking request for the target application from the application server carries the first identifier of the terminal device, so that the API providing network element determines, based on the first identifier of the terminal device, whether the request from the application server to operate the information of the terminal device is authorized by the terminal device, thereby lowering a leakage risk of the information of the terminal device, and improving information security.

In a possible not-claimed implementation, the API invoking response indicates that the API invoking request is rejected, and the API invoking response includes a rejection cause. The rejection cause indicates that the operation requested by the application server fails to be authorized.

A fifth aspect of this not-claimed application provides a communication apparatus. The communication apparatus may be an API providing network element, or may be an apparatus in an API providing network element. In a design, the apparatus may include a module for performing the method/operation/step/action described in the first aspect and in the various possible implementations of the first aspect. The module may be implemented by using a hardware circuit, or software, or a hardware circuit in combination with software. In a design, the apparatus may include a processing module and a transceiver module.

For example, the transceiver module is configured to receive an API invoking request for a target application from an application server, where the API invoking request is for requesting to operate information of a terminal device, and the API invoking request includes a first identifier of the terminal device and an identifier of the target application on the application server side.

The processing module is configured to: obtain an authorization result based on the first identifier of the terminal device and the identifier of the target application on the application server side, where the authorization result indicates whether the application server is allowed to operate the information of the terminal device; and determine, based on the authorization result, whether to allow the application server to perform an operation on the information of the terminal device.

A sixth aspect of this not-claimed application provides a communication apparatus. The apparatus includes a processor, configured to implement the method described in the first aspect. The apparatus may further include a memory, configured to store instructions and data. The memory is coupled to the processor. When the processor executes the instructions stored in the memory, the apparatus may be enabled to implement the method provided in the first aspect and the possible implementations of the first aspect. The apparatus may further include a communication interface through which the apparatus communicates with another device. For example, the communication interface may be a circuit hardware module such as a transceiver or a bus, and another device may be an application server or the like. In a possible design, the apparatus includes:
a memory, configured to store program instructions; and
a processor, configured to: receive an API invoking request for a target application from an application server through a communication interface, where the API invoking request is for requesting to operate information of a terminal device, and the API invoking request includes a first identifier of the terminal device and an identifier of the target application on the application server side; obtain an authorization result based on the first identifier of the terminal device and the identifier of the target application on the application server side, where the authorization result indicates whether the application server is allowed to operate the information of the terminal device; and determine, based on the authorization result, whether to allow the application server to operate the information of the terminal device.

A seventh aspect of this not-claimed application provides a computer-readable storage medium, including instructions. When the instructions are run on a computer, the computer is enabled to perform the method provided in the first aspect and the possible implementations of the first aspect.

An eighth aspect of this not-claimed application provides a chip system. The chip system includes a processor, and may further include a memory, configured to implement the method provided in the first aspect and the possible implementations of the first aspect. The chip system may include a chip, or may include a chip and another discrete device.

A ninth aspect of this not-claimed application provides a communication apparatus. The communication apparatus may be a permission storage network element, or may be an apparatus in a permission storage network element. In a design, the apparatus may include a module for performing the method/operation/step/action described in the second aspect and in the various possible implementations of the second aspect. The module may be implemented by using a hardware circuit, or software, or a hardware circuit in combination with software. In a design, the apparatus may include a processing module and a transceiver module.

For example, the transceiver module is configured to receive an authorization request from an API providing network element, where the authorization request includes a second identifier of a terminal device, an identifier of a target application on a mobile network side, and operation indication information indicating an operation on information of the terminal device, the authorization request is for requesting an authorization result indicating whether an application server is allowed to perform the operation on the information of the terminal device.

The processing module is configured to obtain the authorization result based on the authorization request and storage permission information, where the storage permission information includes a permission of the target application of the terminal device on the mobile network side.

The transceiver module is further configured to send an authorization response to the API providing network element, where the authorization response includes the authorization result.

A tenth aspect of this not-claimed application provides a communication apparatus. The apparatus includes a processor, configured to implement the method described in the second aspect. The apparatus may further include a memory, configured to store instructions and data. The memory is coupled to the processor. When the processor executes the instructions stored in the memory, the apparatus may be enabled to implement the method described in the second aspect and the possible implementations of the second aspect. The apparatus may further include a communication interface through which the apparatus communicates with another device. For example, the communication interface may be a circuit hardware module such as a transceiver or a bus, and another device may be an API providing network element or the like. In a possible design, the apparatus includes:
a memory, configured to store program instructions; and
a processor, configured to: receive an authorization request from an API providing network element through a communication interface, where the authorization request includes a second identifier of a terminal device, an identifier of a target application on a mobile network side, and operation indication information indicating an operation on information of the terminal device, the authorization request is for requesting an authorization result, and the authorization result indicates whether an application server is allowed to perform the operation on the information of the terminal device; obtain the authorization result based on the authorization request and storage permission information, where the storage permission information includes a permission of the target application of the terminal device on the mobile network side; and send an authorization response to the API providing network element, where the authorization response includes the authorization result.

An eleventh aspect of this not-claimed application provides a computer-readable storage medium, including instructions. When the instructions are run on a computer, the computer is enabled to perform the method provided in the second aspect and the possible implementations of the second aspect.

A twelfth aspect of this not-claimed application provides a chip system. The chip system includes a processor, and may further include a memory, configured to implement the method provided in the second aspect and the possible implementations of the second aspect. The chip system may include a chip, or may include a chip and another discrete device.

A thirteenth aspect of this not-claimed application provides a communication apparatus. The communication apparatus may be a terminal device, or may be an apparatus in a terminal device. In a design, the apparatus may include a module for performing the method/operation/step/action described in the third aspect and in the various possible implementations of the third aspect. The module may be implemented by using a hardware circuit, or software, or a hardware circuit in combination with software. In a design, the apparatus may include a processing module and a transceiver module.

For example, the processing module is configured to: determine a permission of a target application on a terminal side; and convert an identifier of the target application on the terminal side into an identifier of the target application on a mobile network side, and convert the permission of the target application on the terminal side into a permission of the target application on the mobile network side.

The transceiver module is configured to send an uplink non-access stratum NAS message to an access and mobility management function network element, where the uplink NAS message includes a second identifier of the terminal device, the identifier of the target application on the mobile network side, and the permission of the target application on the mobile network side.

A fourteenth aspect of this not-claimed application provides a communication apparatus. The apparatus includes a processor, configured to implement the method described in the third aspect. The apparatus may further include a memory, configured to store instructions and data. The memory is coupled to the processor. When the processor executes the instructions stored in the memory, the apparatus may be enabled to implement the method described in the third aspect and the possible implementations of the third aspect. The apparatus may further include a communication interface through which the apparatus communicates with another device. For example, the communication interface may be a circuit hardware module such as a transceiver or a bus, and another device may be an access and mobility management function network element or the like. In a possible design, the apparatus includes:
a memory, configured to store program instructions; and
a processor, configured to: determine a permission of a target application on a terminal side; convert an identifier of the target application on the terminal side into an identifier of the target application on a mobile network side, and convert the permission of the target application on the terminal side into a permission of the target application on the mobile network side; and send an uplink non-access stratum NAS message to an access and mobility management function network element, where the uplink NAS message includes a second identifier of the terminal device, the identifier of the target application on the mobile network side, and the permission of the target application on the mobile network side.

A fifteenth aspect of this not-claimed application provides a computer-readable storage medium, including instructions. When the instructions are run on a computer, the computer is enabled to perform the method provided in the third aspect and the possible implementations of the third aspect.

A sixteenth aspect of this not-claimed application provides a chip system. The chip system includes a processor, and may further include a memory, configured to implement the method provided in the third aspect and the possible implementations of the third aspect. The chip system may include a chip, or may include a chip and another discrete device.

A seventeenth aspect of this not-claimed application provides a communication system. The communication system includes the API providing network element involved in the first aspect and the permission storage network element involved in the second aspect. Optionally, the communication system further includes the application server involved in the fourth aspect.

### BRIEF DESCRIPTION OF DRAWINGS

FIG. 1a is a schematic diagram of a network architecture of a 5G system;
FIG. 1b is a schematic diagram of a network architecture of 5G MEC;
FIG. 2 is a schematic diagram of correspondences between identifiers and permissions of a target application according to an embodiment of this application;
FIG. 3 is a schematic diagram of a network architecture to which an embodiment of this application is applied;
FIG. 4 is a schematic flowchart of a method for invoking an API according to Embodiment 1 of this application;
FIG. 5 is a schematic flowchart of a method for invoking an API according to Embodiment 2 of this application;
FIG. 6 is a schematic flowchart of a method for invoking an API according to Embodiment 3 of this application;
FIG. 7 is a schematic flowchart of a method for invoking an API according to Embodiment 4 of this application;
FIG. 8 is a schematic flowchart of a method for invoking an API according to Embodiment 5 of this application;
FIG. 9 is a schematic flowchart of a method for invoking an API in a network architecture of 5G MEC according to an embodiment of this application;
FIG. 10 is a schematic diagram of a structure of a communication apparatus according to an embodiment of this application; and
FIG. 11 is a schematic diagram of a structure of another communication apparatus according to an embodiment of this application.

### DESCRIPTION OF EMBODIMENTS

To better understand the technical solutions provided in embodiments of this application, technical terms used in embodiments of this application are first described.

### 1. Network architecture of a 5^{th}-generation (5th-generation, 5G) communication system

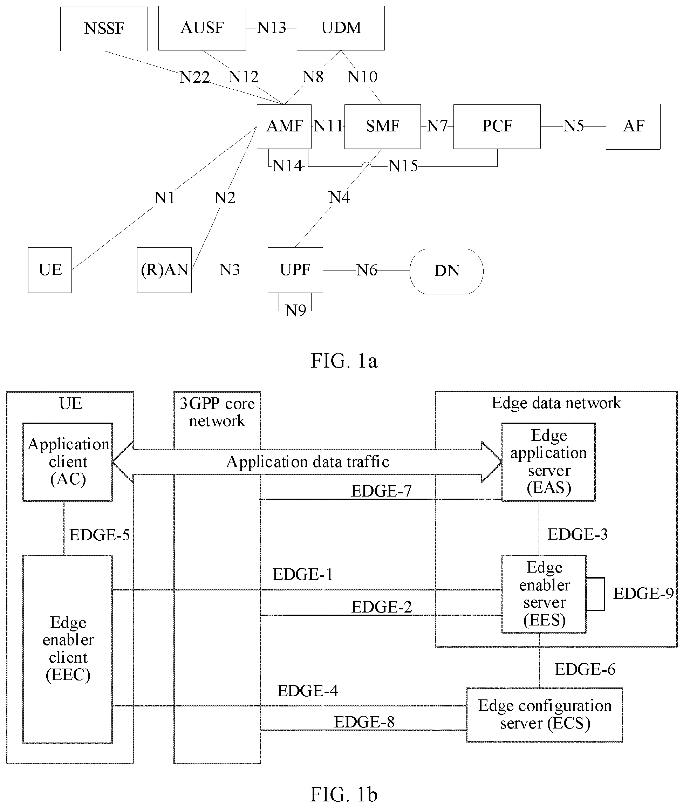

FIG. 1a is a schematic diagram of a network architecture of a 5G system. The network architecture includes user equipment (user equipment, UE), an access network (access network, AN) device, a core network element, and a data network (data network, DN).

The access network device may alternatively be a radio access network (radio access network, RAN) device. The access network device may include a base station (base station, BS), and may be a device that is deployed in a radio access network and that can communicate with a terminal device in a wireless manner. The base station may be in a plurality of forms, such as a macro base station, a micro base station, a relay station, and an access point. For example, the access network device involved in embodiments of this application may be a base station in 5G or a base station in long term evolution (long term evolution, LTE). The base station in 5G may also be referred to as a transmission reception point (transmission reception point, TRP) or a next generation NodeB (next generation NodeB, gNB).

The core network element may include the following network elements: a user plane function (user plane function, UPF) network element, an access and mobility management function (access and mobility management function, AMF) network element, a session management function (session management function, SMF) network element, a policy control function (policy control function, PCF) network element, an application function (application function, AF) network element, an authentication server function (authentication server function, AUSF) network element, a network slice selection function (network slice selection function, NSSF) network element, and a unified data management (unified data management, UDM) network element.

The AMF network element is a termination point of non-access stratum (Non-access stratum, NAS) signaling, and is mainly responsible for user access and mobility management. The UE and the AMF may communicate with each other via an N1 NAS message, and may be transferred via an N2 message from a RAN. The RAN communicates with the AMF via the N2 message.

The SMF network element is responsible for managing establishment, deletion, and the like of a session of a user, and maintaining a PDU (protocol data unit, PDU) session context and user plane forwarding pipeline information.

The NSSF network element is configured to support flexible slice selection based on information such as user-requested and subscribed network slice selection assistance information (network slice selection assistance information, NSSAI), a user location area, a slice capacity, and current slice load.

The PCF network element is configured to generate and manage user, session, and quality of service (quality of service, QoS) flow processing policies.

The UDM network element is configured to manage subscription information of a user, to complete user authentication and authorization.

The AF network element provides an application service, and may be located inside or outside a carrier network. In embodiments of this application, the AF network element may be referred to as an application server, and for example, may be a positioning server or a server corresponding to a shopping application program.

In addition to the foregoing core network elements, the 5G system may further include the following core network elements:
a network exposure function (Network Exposure Function, NEF) network element, configured to provide an exposed API provided by a carrier network for interaction between an external server and an internal carrier network; and
a unified data repository (unified data repository, UDR) network element, configured to store subscription data of the UDM network element, policy data of the PCF network element, structured data of the NEF network element, and the like. The UDM network element, the PCF network element, and the NEF network element may obtain related data from the UDR network element.

Core network elements involved in embodiments of this application include the AMF network element, the UDM network element, the UDR network element, the AF network element, a common API framework (common API framework, CAPIF) network element, and the NEF network element. The CAPIF may provide support for service API operations, and enables an API invoker (invoker) to discover and invoke a service API provided by an API providing network element.

The schematic diagram of the network architecture shown in FIG. 1a further includes interfaces between network elements. For example, N2 represents an interface between an AMF network element and a RAN device.

### 2. Network architecture of 5G mobile edge computing (mobile edge computing, MEC)

FIG. 1b is a schematic diagram of a network architecture of 5G MEC. The network architecture includes UE, a 3^{rd}-generation partnership project (3^{rd}-generation partnership project, 3GPP) core network, and an edge data network (edge data network).

The UE may include an application client (application client(s), AC) and an edge enable client (edge enable client, EEC). An interface between the AC and the EEC may be an edge-5 interface.

The AC is a module of the UE, and may be understood as a client of an application (application, App), such as a client of a shopping App or a client of an instant messaging App installed on the UE.

The EEC is a module of the UE, and provides functions required by the AC, including obtaining configuration information for data transmission with an edge application server (edge application server(s), EAS), discovering an EAS in an edge network, and the like.

The 3GPP core network is a core network defined in a 3GPP protocol, and may be a 5G core network or a core network in a future communication system.

The edge data network may include an EAS and an edge enable server (edge enable server(s), EES). The interface between the EAS and the EES may be an edge-3 interface.

The EAS is an application server located on the edge data network and provides application services. When communicating with the UE, the EAS may directly transmit application data with the AC of the UE, or transmit data through the 3GPP core network. An interface between the EAS and the 3GPP core network may be an edge-7 interface.

The EES, which is located on the edge data network, provides functions for supporting the EAS and an edge configuration server (edge configuration server, ECS), including providing information for the EEC to connect to the EAS for data exchange, providing functions of API invoking and API exposure, and providing a capacity to interact with a mobile network. An interface between the EES and the EEC may be an edge-1 interface, and an interface between the EES and the 3GPP core network may be an edge-2 interface, that is, an interface between the EES and the mobile network.

The ECS, which is located on the edge data network, provides a function to support the EEC to connect to the EES, including providing information for the EEC to connect to the network on which the EES is located and information of the EES.

In embodiments of this application, the EAS, the EES, and the ECS may be referred to as application servers.

### 3. Identifier of a target application on a terminal device side, identifier of the target application on a mobile network side, and identifier of the target application on an application server side; and permission of the target application on the UE side, permission of the target application on the mobile network side, and permission of the target application on the application server side

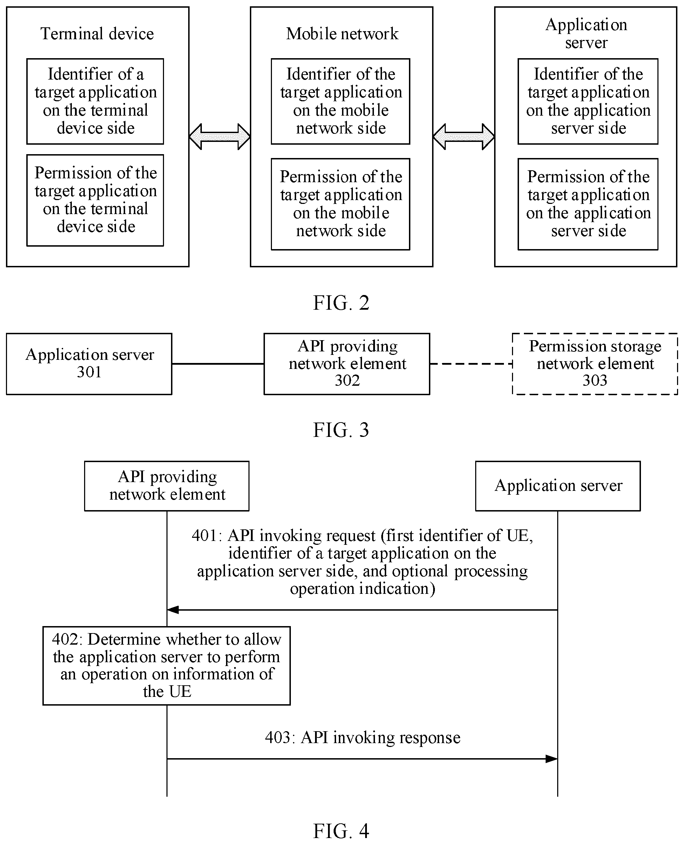

For the identifier of the target application on the UE side, the identifier of the target application on the mobile network side, the identifier of the target application on the application server side, the permission of the target application on the UE side, the permission of the target application on the mobile network side, and the permission of the target application on the application server side, refer to the schematic diagram shown in FIG. 2. The application may be software that provides a function required by a service, for example, may be an application program that is run on a terminal device. The target application may be any application.

The identifier of the target application on the terminal device side may be understood as an identifier on the terminal device side for identifying the target application. For example, the identifier of the target application on the UE side may be an application package name, an operating system (operating system, OS) application (application, App) identifier (identifier, ID), or the like.

The identifier of the target application on the mobile network side may be understood as an identifier on the mobile network side for identifying the target application. The mobile network may be a mobile operator, for example, a 5G core network. For example, the identifier of the target application on the mobile network side may be an application identifier (application identifier), an AF ID, an application server (application server, AS) ID, an AF transaction (transaction) ID, an operating system identifier (OSID)+OSAppID, or the like.

The identifier of the target application on the application server side may be understood as an identifier used by the application server to identify the target application. For example, the identifier of the target application on the application server side may be an application identifier, an external application identifier (external application identifier), an IP address, an IP triplet or quintuplet, an AF ID, an AS ID, an AF transaction (transaction) ID, or the like.

The identifier of the target application on the terminal device side, the identifier of the target application on the mobile network side, and the identifier of the target application on the application server side may be the same or may be different.

The permission of the target application on the terminal device side refers to a permission of the target application on the terminal device, that is, whether the target application can perform an operation is granted by the user. A possible format of the permission of the target application on the terminal device side is {allowed/conditionally allowed/forbidden/conditionally forbidden, an operation}. The operation may be reading/adding/modifying/deleting a piece of information by the target application. For example, the user allows the target application to read a device ID of the terminal device, forbids the target application to access location information of the terminal device, allows the target application to access the location information of the terminal device during use of the target application, and allows the target application to adjust a configuration during use of the target application. Another possible format of the permission of the target application on the terminal device side is {allowed/conditionally allowed/forbidden/conditionally forbidden, an API of a system}. The API of the system is an API of an operating system of the terminal device, for example, an API of an Android system or an API of an iPhone operating system (iOS). For example, if the user allows the target application to access a user equipment number during use, a possible format of the permission of the target application on the terminal device side is {allowed during use, access to the API of the user equipment number}.

The permission of the target application on the mobile network side refers to a permission of the target application on the mobile network. The possible format is {allowed/conditionally allowed/forbidden/conditionally forbidden, an exposed API of a mobile network}. The exposed API of the mobile network refers to an API provided by a mobile operator, for example, an exposed API of a 5G core network. For example, if the user allows the target application to access location information of the user within a specified time period, the possible format of the permission of the target application on the mobile network side is {allowed within the specified time period, an API for accessing the location information of the user}.

The permission of the target application on the application server side refers to a permission of the target application on the application server.

The permission of the target application on the UE side, the permission of the target application on the mobile network side, and the permission of the target application on the application server side may be the same or may be different.

### 4. Information of the terminal device, first identifier of the terminal device, and second identifier of the terminal device

The terminal device (or referred to as a terminal) involved in embodiments of this application may be a device having a wireless transceiver function. The terminal device may be deployed on land, including an indoor device, an outdoor device, a handheld device, or a vehicle-mounted device; or may be deployed on the surface of water (such as in a steamship); or may be deployed in the air (such as on an airplane, a balloon, and a satellite). The terminal device may be UE, and the UE may be a handheld device, a vehicle-mounted device, a wearable device or a computing device having a wireless communication function. For example, the UE may be a mobile phone (mobile phone), a tablet computer, or a computer having a wireless transceiver function. The terminal device may also be a virtual reality (virtual reality, VR) terminal device, an augmented reality (augmented reality, AR) terminal device, a smart vehicle (smart vehicle) terminal device, a wireless terminal in industrial control, a wireless terminal in unmanned driving, a drone, a drone controller, a wireless terminal in telemedicine, a wireless terminal in a smart grid, a wireless terminal in a smart city (smart city), a wireless terminal in a smart home (smart home), or the like.

The information of the terminal device may be information collected from or stored on the terminal device, and the information may be multimedia information, privacy information, configuration information, or the like. The multimedia information is, for example, a video, audio, an image, and a text. The privacy information is, for example, location information, a contact, a call record, a chat record, or a device identifier. The configuration information is, for example, configuration information of an operating system or configuration information of an application. In this application, the information of the terminal device may refer to context information of a terminal stored in the mobile network.

In this application, the first identifier of the terminal device identifies the terminal device on the application server side. The second identifier of the terminal device identifies the terminal device in the mobile network, that is, identifies the terminal device in the mobile operator, for example, identifies the terminal device in a 5G core network. The first identifier of the terminal device and the second identifier of the terminal device may be the same or may be different.

For example, the first identifier may be one or more of the following:
an Internet Protocol (Internet protocol, IP) address, an IP triplet, an IP quintuplet, a generic public subscription identifier (generic public subscription identifier, GPSI), or the like.

For example, the second identifier may be a subscription permanent identifier (subscription permanent identifier, SUPI), a globally unique temporary identifier (globally unique temporary identifier, GUTI), or the like.

### 5. API in a mobile network

In a mobile network, an API providing network element may provide, for an application server, some APIs for operating information of a terminal device. These APIs may be, for example, a parameter configuration service, a location service, and an identity conversion service. The application server may invoke these APIs to read/modify/add/delete the information of the terminal device.

For example, the parameter configuration service may configure application information of the terminal device, for example, a desired behavior of the terminal device, a network configuration parameter, and a positioning-privacy indication. The application server invokes the API corresponding to the parameter configuration service to configure the application information of the terminal device.

For another example, the location service may request to obtain location information of the terminal device. A positioning server may read the location information of the terminal device by invoking the API corresponding to the location service.

For another example, the identity conversion service may request, by using an Internet Protocol (Internet protocol, IP) address of the terminal device, to obtain a generic public subscription identifier (generic public subscription identifier, GPSI) of the terminal device. The application server invokes the identity conversion service, and uses the IP address of the terminal device as an input of the API corresponding to the identity conversion service. An output of the API is the GPSI of the terminal device. In other words, the application server may obtain the GPSI of the terminal device by invoking the API corresponding to the identity conversion service.

When an App is installed or set on the terminal device, a user may authorize whether to allow the App to perform a corresponding operation. For example, when a navigation App is installed on the terminal device, the user may authorize the APP to read the location information of the terminal device. The terminal device may send a permission of the set application on a terminal device side to the API providing network element, so that the API providing network element can provide a service granularity-based API.

In a process in which the application server invokes the API, whether the user authorizes the application server to perform a corresponding operation is not considered. Therefore, when the API providing network element is authenticated, all applications may obtain corresponding services by invoking the APIs. Consequently, the information of the terminal device may be leaked, resulting in a security risk.

In view of this, embodiments of this application provide a method and system for invoking an API, and an apparatus, to lower a leakage risk of the information of the terminal device, thereby improving information security.

In the accompanying drawings in embodiments of this application, steps shown in embodiments and a sequence of the steps are used as examples, and do not constitute any limitation on embodiments of this application. It should be understood that performing some steps in the figure or adjusting a sequence of the steps for specific implementation falls within the protection scope of this application.

Technologies described in embodiments of this application may be applied to various communication systems, for example, a 4^{th} generation (4th generation, 4G) communication system, a 4.5G communication system, a 5G communication system, a system integrating a plurality of communication systems, and a future evolved communication system.

FIG. 3 is a schematic diagram of a network architecture to which an embodiment of this application is applied. FIG. 3 includes an application server 301 and an API providing network element 302.

The application server 301 may be the AF in FIG. 1a, or may be the EAS, the EES, or the ECS in FIG. 1b.

The API providing network element 302 is configured to provide, for the application server 301, an API for performing an operation on information of a terminal device. The API providing network element may be an NEF network element in a 5G core network, or may be a CAPIF, or may be the EES, the ECS, or the like in FIG. 1b. The CAPIF may provide support for service API operations, and enables an API invoker (invoker) to discover and invoke a service API provided by the API providing network element.

Optionally, the network architecture shown in FIG. 3 further includes a permission storage network element 303, configured to store an identifier of an application on a mobile network side and a permission of the application on the mobile network side. The permission storage network element 303 may be a UDM network element, or a UDR network element, or a PCF network element in the 5G core network.

It should be noted that names of the application server 301, the API providing network element 302, and the permission storage network element 303 are used as examples, and do not constitute any limitation on this embodiment of this application.

In this application, the application server 301 sends an API invoking request for a target application to the API providing network element 302. The API invoking request is for requesting to operate the information of the terminal device, and includes a first identifier of the terminal device and an identifier of the target application on the application server side. The application server 301 obtains an authorization result based on the first identifier of the terminal device and the identifier of the target application on the application server side. The authorization result indicates that the application server is allowed to operate the information of the terminal device. The API providing network element 302 determines, based on the authorization result, whether to allow the application server to perform the operation on the information of the terminal device.

In an implementation, the API providing network element 302 sends an authorization request to the permission storage network element 303, where the authorization request includes a second identifier of the terminal device, an identifier of the target application on the mobile network side, and operation indication information indicating the operation on the information of the terminal device, the authorization request is for requesting the authorization result, and the authorization result indicates whether the application server 301 is allowed to perform the operation on the information of the terminal device. The authorization result is obtained based on the authorization request and storage permission information, where the storage permission information includes a permission of the target application of the terminal device on the mobile network side. An authorization response is sent to the API providing network element 302, where the authorization response includes the authorization result. The API providing network element directly determines, based on the authorization result, whether to allow the application server to perform the operation on the information of the terminal device.

In an implementation, the API providing network element 302 sends an authorization request to the permission storage network element 303, where the authorization request includes the second identifier of the terminal device. The permission storage network element 303 obtains permissions of all applications corresponding to the terminal device on the mobile network side based on the second identifier of the terminal device, and sends an authorization response to the API providing network element 302, where the authorization response includes the permissions of all the applications corresponding to the terminal device on the mobile network side. The API providing network element 302 autonomously determines, based on the identifier of the target application on the application server side, the permissions of all the applications corresponding to the terminal device on the mobile network side, and the operation indication information, whether to allow the application server to operate the information of the terminal device, where the operation indication information indicates the operation on the information of the terminal device.

In an implementation, the API providing network element 302 sends an authorization request to the permission storage network element 303, where the authorization request includes the identifier of the target application on the mobile network side. The permission storage network element 303 obtains permissions of all terminal devices corresponding to the target application on the mobile network side based on the identifier of the target application on the mobile network side, and sends an authorization response to the API providing network element 302, where the authorization response includes the permissions of all the terminal devices corresponding to the target application on the mobile network side. The API providing network element 302 autonomously determines, based on the permissions of all the terminal devices corresponding to the target application on the mobile network side, the first identifier of the terminal device, and the operation indication information, whether to allow the application server to operate the information of the terminal device, where the operation indication information indicates the operation on the information of the terminal device.

In an implementation, the API providing network element 302 sends an authorization request to the permission storage network element 303, where the authorization request includes the second identifier of the terminal device and the identifier of the target application on the mobile network side. The permission storage network element 303 obtains the permission of the target application of the terminal device on the mobile network side based on the second identifier of the terminal device and the identifier of the target application on the mobile network side, and sends an authorization response to the API providing network element 302, where the authorization response includes the permission of the target application of the terminal device on the mobile network side. The API providing network element autonomously determines, based on the permission of the target application of the terminal device on the mobile network side and the operation indication information, whether to allow the application server to operate the information of the terminal device, where the operation indication information indicates the operation on the information of the terminal device.

The operation indication information in the foregoing several implementations may be determined based on the API invoking request, or may be determined based on a processing operation request, where the API invoking request includes a processing operation indication.

The following describes the method for invoking an API provided in embodiments of this application in detail. An example in which the terminal device is UE is used. It should be noted that names of messages between network elements, names of parameters in the messages, or the like in the following embodiments of this application are merely examples, and there may be other names during specific implementation. This is not specifically limited in embodiments of this application.

FIG. 4 is a schematic flowchart of a method for invoking an API according to Embodiment 1 of this application. The process may include but is not limited to the following steps:

Step 401: An application server sends an API invoking request for a target application to an API providing network element. Correspondingly, the API providing network element receives the API invoking request for the target application from the application server.

The API invoking request is for requesting invoking of an API to operate information of UE. It may be understood that operating the information of the UE needs to be authorized by a user, that is, authorized by the UE. The API invoking request may be understood as that the application server sends a request to invoke an API at a UE granularity to the API providing network element. The UE granularity may be understood as a permission of an application on the UE. Application permissions of a same application on different UEs may be different.

Further, the API invoking request may be understood as a request sent by the application server to the API providing network element to request to read/modify/add/delete the information of the UE.

The API invoking request includes a first identifier of the UE, identifies the UE that requests an operation, that is, an operated object that requests an operation. For the first identifier of the UE, refer to the description of the first identifier of the terminal device in the term introduction part.

The API invoking request further includes an identifier of the target application on an application server side. The target application may be located on an application server that initiates the API invoking request, or may be located on another application server.

Optionally, the API invoking request further includes a processing operation indication, used to indicate a requested operation. The requested operation is, for example, reading/modifying/adding/deleting the information of the UE. If the application server sends an API invoking request having a specific API function to the API providing network element, or the application server invokes an API having a specific API function, the API invoking request may not carry the processing operation indication. When the API invoking request carries the processing operation indication, the API providing network element may perform step 402 based on the processing operation indication.

For example, if the API invoking request is for requesting obtaining of a GPSI of the UE by using an IP address of the UE, the API invoking request includes the first identifier of the UE (that is, the IP address of the UE) and the identifier of the target application on the application server side. The application server invokes a UE ID API exposed by the API providing network element. An input parameter of the API includes the IP address of the UE and the identifier of the target application on the application server side. The UE ID API may match operation indication information indicating that reading of the GPSI of the UE is requested.

For example, if the API invoking request is used to read location information of the UE, the API invoking request includes the first identifier of the UE (that is, the GPSI of the UE) and the identifier of the target application on the application server side. The identifier, on the application server side, of the target application may be an identifier, on the application server side, of a target application that needs to read the location information of the UE. The application server invokes a location service API exposed by the API providing network element. The input parameter of the API includes the GPSI of the UE and the identifier, on the application server side, of the target application. The location service API matches the operation indication information indicating that reading of the location information of the UE is requested.

Step 402: The API providing network element determines whether to allow the application server to perform an operation on the information of the UE.

It may be understood that the API providing network element determines whether to allow the target application to perform the operation on the information of the UE.

The API providing network element interacts with a permission storage network element, to determine whether to allow the application server to perform the requested operation. The API providing network element determines whether to allow the application server to perform the operation on the information of the UE in the following two manners:
Manner 1: The API providing network element obtains an authorization result from the permission storage network element, where the authorization result indicates whether the application server is allowed to perform the operation on the information of the UE. The authorization result may be represented in a form of a binary value. For example, 1 indicates that authorization is allowed, and 0 indicates that authorization fails to be allowed.

The API providing network element sends an authorization request to the permission storage network element, where the authorization request is for requesting the authorization result.

In an implementation, the permission storage network element includes storage permission information, where the storage permission information includes a second identifier of the UE, an identifier of the target application on a mobile network side, and a permission of the target application on the mobile network side. The permission storage network element obtains the authorization result based on the second identifier of the UE, the identifier of the target application on the mobile network side, the operation indication information, and the storage permission information. For example, the permission storage network element stores the identifier of the target application on the mobile network side and the permission of the target application on the mobile network side into context information corresponding to the second identifier of the UE. The authorization request may include the identifier of the target application on the mobile network side, the second identifier of the UE, and the operation indication information. When receiving the authorization request, the permission storage network element obtains the context information of the UE based on the second identifier of the UE; obtains the permission of the target application corresponding to the context information of the UE on the mobile network side based on the identifier of the target application on the mobile network side; and determines, based on the operation indication information and the permission of the target application on the mobile network side, whether the application server can be authorized to perform the operation indicated by the operation indication information. The permission storage network element generates the authorization result based on a determining result, where the authorization result indicates whether the application server is authorized to perform the operation on the information of the UE. For the second identifier of the UE, refer to the description of the second identifier of the terminal device in the term introduction part.

Optionally, the operation indication information is obtained based on the API invoking request. For example, the operation indication information is obtained based on a specific API function of the API invoking request, or is obtained based on the processing operation indication carried in the API invoking request. For example, the operation indication information may be in a form of an API name. The API providing network element may convert the processing operation indication into the operation indication information.

Optionally, if the identifier of the target application on the application server side is different from the identifier of the target application on the mobile network side, the permission storage network element or the API providing network element may convert the identifier of the target application on the application server side into the identifier of the target application on the mobile network side. For example, if an identifier of an App1 on the application server side is an AF ID1, and an identifier of the App1 on the mobile network side is an OSID1+OSAppID1, the permission storage network element or the API providing network element may convert the AF ID1 of the App 1 into the OSID1+OSAppID1 of the App1.

Optionally, if the first identifier of the UE is different from the second identifier of the UE, the permission storage network element or the API providing network element may convert the first identifier of the UE into the second identifier of the UE. For example, if a second identifier of UE A is an SUPI, and a first identifier of the UE A is a GPSI, the permission storage network element or the API providing network element may convert the GPSI of the UE A into the SUPI of the UE A.

Optionally, the API providing network element further sends a permission check indication to the permission storage network element, where the permission check indication indicates performing of permission check by the permission storage network element. After receiving the permission check indication, the permission storage network element triggers the foregoing process in which the permission of the target application on the mobile network side is checked.

For example, the context information of the UE indicated by the SUPI on the permission storage network element stores an OSAppID of a shopping Appl, and further stores a permission of the shopping App1 on the mobile network side, that is, the shopping App1 is forbidden to read the location information of the UE from 9:00 a.m. to 9:00 p.m. The application server corresponding to the shopping App1 invokes an exposed API for a location service provided by the API providing network element (for example, an NEF/a CAPIF). The input parameter of the API includes the identifier of the target application on the application server side (that is, an identifier of the shopping App1 on the application server side) and the first identifier (that is, the GPSI) of the UE. It may be understood that the application server corresponding to the shopping App1 sends an API invoking request to the NEF/CAPIF, where the API invoking request includes the identifier of the target application on the application server side (that is, the identifier of the shopping App1 on the application server side) and the first identifier (that is, the GPSI) of the UE. When receiving the API invoking request or the input parameter of the API, the NEF/CAPIF converts the GPSI of the UE into the SUPI of the UE, converts the identifier of the target application on the application server side into the OSAppID, and converts the action of invoking the API for a location service into reading of the operation indication information of the location information. After the conversion, the NEF/CAPIF sends an authorization request to the permission storage network element, where the authorization request includes the SUPI and the OSAppID of the UE, and the operation indication information for reading the location information. When receiving the authorization request, the permission storage network element obtains the context information of the UE based on the SUPI of the UE, and finds, in the context information of the UE, that the permission of the shopping App1 corresponding to the mobile network side and indicated by the OSAppID is that the location information of the UE is forbidden to be read from 9:00 a.m. to 9:00 p.m. The permission storage network element generates and sends the authorization result to the NEF/CAPIF based on current time of 12:00 noon and the operation indication information for reading the location information, where the authorization result indicates that the UE does not authorize the application server to read the location information of the UE.

Manner 2: The API providing network element obtains storage information from the permission storage network element, and obtains the authorization result based on the storage information, where the authorization result indicates whether the application server is allowed to perform the operation on the information of the UE. Manner 2 is classified into Manner A, Manner B, and Manner C based on different storage information.

Manner A: The storage information refers to permissions of all target applications corresponding to the UE on the mobile network side.

In an implementation, the permission storage network element includes the storage permission information, where the storage permission information includes the second identifier of the UE, the identifier of the target application on the mobile network side, and the permission of the target application on the mobile network side. The permission storage network element obtains the permissions of all the target applications corresponding to the UE on the mobile network side based on the second identifier of the UE and the storage permission information. For example, the permission storage network element stores the identifier of the target application on the mobile network side and the permission of the target application on the mobile network side into the context information corresponding to the second identifier of the UE. The API providing network element sends the second identifier of the UE to the permission storage network element. The permission storage network element searches for the context information of the UE based on the second identifier of the UE, obtains the permissions of all the target applications corresponding to the UE on the mobile network side from the context information of the UE, and sends the permissions to the API providing network element. The API providing network element determines, based on the permissions of all the target applications corresponding to the UE on the mobile network side and the API invoking request, whether to allow the application server to perform the operation on the information of the UE. Specifically, the API providing network element searches for the permissions of all the target applications corresponding to the UE on the mobile network side based on the identifier of the target application on the mobile network side carried in the API invoking request, to obtain the permission of the target application on the mobile network side, and determines, based on the permission of the target application on the mobile network side and the operation indication information, whether to allow the application server to perform the operation on the information of the UE, to obtain the authorization result.

Optionally, if the identifier of the target application on the application server side is different from the identifier of the target application on the mobile network side, the permission storage network element or the API providing network element may convert the identifier of the target application on the application server side into the identifier of the target application on the mobile network side.

Optionally, if the first identifier of the UE is different from the second identifier of the UE, the permission storage network element or the API providing network element may convert the first identifier of the UE into the second identifier of the UE.

For example, the context information of the UE indicated by the SUPI on the permission storage network element stores an OSAppID of each existing App on the UE, and further stores a permission of each App on the mobile network side. The API providing network element sends the SUPI of the UE to the permission storage network element. The permission storage network element searches for the context information of the UE based on the SUPI of the UE, obtains the permissions of all the target applications (including the shopping App1) corresponding to the UE in the mobile network from the context information of the UE, and sends the permission to the API providing network element. The API providing network element obtains the permission of the shopping App1 on the mobile network side based on the permissions of all the target applications corresponding to the UE on the mobile network side and the identifier of the shopping App1 on the application server side, and determines, based on the permission of the shopping App1 on the mobile network side, whether to allow the application server corresponding to the shopping App1 to perform the operation on the information of the UE, to obtain the authorization result.

Manner B: The storage information refers to permissions of all UEs corresponding to the target application on the mobile network side.

In an implementation, permission storage network element includes the storage permission information, where the storage permission information includes the second identifier of the UE, the identifier of the target application on the mobile network side, and the permission of the target application on the mobile network side. The permission storage network element obtains the permissions of all the target applications corresponding to the UE on the mobile network side based on the second identifier of the UE and the storage permission information. For example, the permission storage network element stores the identifier of the target application on the mobile network side and the permission of the target application on the mobile network side into the context information corresponding to the second identifier of the UE. The API providing network element sends the identifier of the target application on the mobile network side to the permission storage network element. The permission storage network element searches for the permissions of all the UEs corresponding to the target application on the mobile network side based on the identifier of the target application on the mobile network side, and sends the permissions of all the UEs corresponding to the target application on the mobile network side to the API providing network element. The API providing network element determines, based on the permissions of all the UEs corresponding to the target application on the mobile network side and the API invoking request, whether to allow the application server to perform the operation on the information of the UE, to obtain the authorization result. Specifically, the API providing network element searches for the permissions of all the UEs corresponding to the target application on the mobile network side based on the first identifier of the UE carried in the API invoking request, to obtain the permission of the UE on the mobile network side, and determines, based on the permission of the UE on the mobile network side and the operation indication information, whether to allow the application server to perform the requested operation.

Optionally, if the identifier of the target application on the application server side is different from the identifier of the target application on the mobile network side, the permission storage network element or the API providing network element may convert the identifier of the target application on the application server side into the identifier of the target application on the mobile network side.

Optionally, if the first identifier of the UE is different from the second identifier of the UE, the permission storage network element or the API providing network element may convert the first identifier of the UE into the second identifier of the UE.

For example, the context information of the UE indicated by the SUPI on the permission storage network element stores an OSAppID of each existing App on the UE, and further stores a permission of each App on the mobile network side. The API providing network element sends the identifier of the shopping App1 on the mobile network side to the permission storage network element. The permission storage network element searches for, based on the identifier of the shopping App1 on the mobile network side, permission, on the mobile network side, of all UEs that authorizes the shopping App1, and sends the permissions of all the UEs corresponding to the shopping App1 on the mobile network side to the API providing network element. The API providing network element determines, based on the permissions, on the mobile network side, of all the UEs that authorizes the shopping Appl, and the first identifier of the UE, whether to allow the application server to perform the operation on the information of the UE, to obtain the authorization result.

Manner C: The storage information refers to a permission of the target application of the UE on the mobile network side.

In an implementation, the permission storage network element includes storage permission information, where the storage permission information includes the second identifier of the UE, the identifier of the target application on the mobile network side, and the permission of the target application on the mobile network side. The permission storage network element obtains the permission of the target application corresponding to the UE on the mobile network side based on the second identifier of the UE, the identifier of the target application on the mobile network side, and the storage permission information. For example, the permission storage network element stores the identifier of the target application on the mobile network side and the permission of the target application on the mobile network side into the context information corresponding to the second identifier of the UE. The API providing network element sends the second identifier of the UE and the identifier of the target application on the mobile network side to the permission storage network element. The permission storage network element searches for the context information of the UE based on the second identifier of the UE, obtains the permission of the target application corresponding to the context information of the UE on the mobile network side based on the identifier of the target application on the mobile network side, and sends the permission of the target application of the UE on the mobile network side to the API providing network element. Specifically, the API providing network element determines, based on the permission of the target application of the UE on the mobile network side and the operation indication information, whether to allow the application server to perform the operation on the information of the UE, to obtain the authorization result.

Optionally, if the identifier of the target application on the application server side is different from the identifier of the target application on the mobile network side, the permission storage network element or the API providing network element may convert the identifier of the target application on the application server side into the identifier of the target application on the mobile network side.

Optionally, if the first identifier of the UE is different from the second identifier of the UE, the permission storage network element or the API providing network element may convert the first identifier of the UE into the second identifier of the UE.

For example, the context information of the UE indicated by the SUPI on the permission storage network element stores the OSAppID of the shopping App1, and further stores the permission of the shopping App1 on the mobile network side. The API providing network element sends the SUPI of the UE and the identifier of the shopping App1 on the mobile network side to the permission storage network element. The permission storage network element obtains the context information of the UE based on the SUPI of the UE, searches for, in the context information of the UE, the permission of the shopping App1 on the mobile network side and indicated by the OSAppID, and sends the permission of the shopping App1 on the mobile network side to the API providing network element. The API providing network element determines, based on the permission of the shopping App1 on the mobile network side, whether to allow the application server to perform the operation on the information of the UE.

Optionally, in manner 2, the API providing network element further sends a permission obtaining indication to the permission storage network element, where the permission obtaining indication indicates the permission provided by the permission storage network element on the mobile network side. After receiving the permission obtaining indication, the permission storage network element triggers the foregoing process of providing the permission of the target application on the mobile network side.

In manner 2, the API providing network element obtains the storage information from the permission storage network element. The API providing network element may also store the storage information, so that when determination may be performed based on the storage information, the API providing network element, after receiving the API invoking request, directly determines, based on the storage information, whether to allow the application server to perform the request operation.

For the foregoing manner A, the API providing network element stores the permissions of all the target applications corresponding to the UE on the mobile network side. In this case, when receiving again the API invoking request for requesting to operate the information of the same UE, the API providing network element may directly search for the permissions of all the target applications corresponding to the UE on the mobile network side based on the identifier, carried in the API invoking request, of the target application on the application server side, to obtain the permission of the target application on the mobile network side, and determines, based on the permission of the target application on the mobile network side, and the specific API function or the operation indication information carried in the API invoking request, whether to allow the application server to perform the operation on the information of the UE.

For the foregoing manner B, the API providing network element stores the permissions of all the UEs corresponding to the target application on the mobile network side. In this case, when receiving again an API invoking request initiated by a same target application, the API providing network element may directly search for the permissions of all the UEs corresponding to the target application on the mobile network side based on the first identifier of the UE carried in the API invoking request, to obtain the permission of the UE on the mobile network side, and determines, based on the permission of the UE on the mobile network side, and a specific API function or the operation indication information carried in the API invoking request, whether to allow the application server to perform the requested operation.

For the foregoing manner C, the API providing network element stores the permission of the target application of the UE on the mobile network side. In this case, when receiving again the API invoking request initiated by the same target application for requesting to operate information of the same UE, the API providing network element may directly obtain the permission of the target application of the UE on the mobile network side based on the first identifier of the UE and the identifier of the target application on the mobile network side that are carried in the API invoking request, to obtain the permission of the target application of the UE on the mobile network side, and determines, based on the permission of the target application of the UE on the mobile network side, and a specific API function or the operation indication information carried in the API invoking request, whether to allow the application server to perform the operation on the information of the UE.

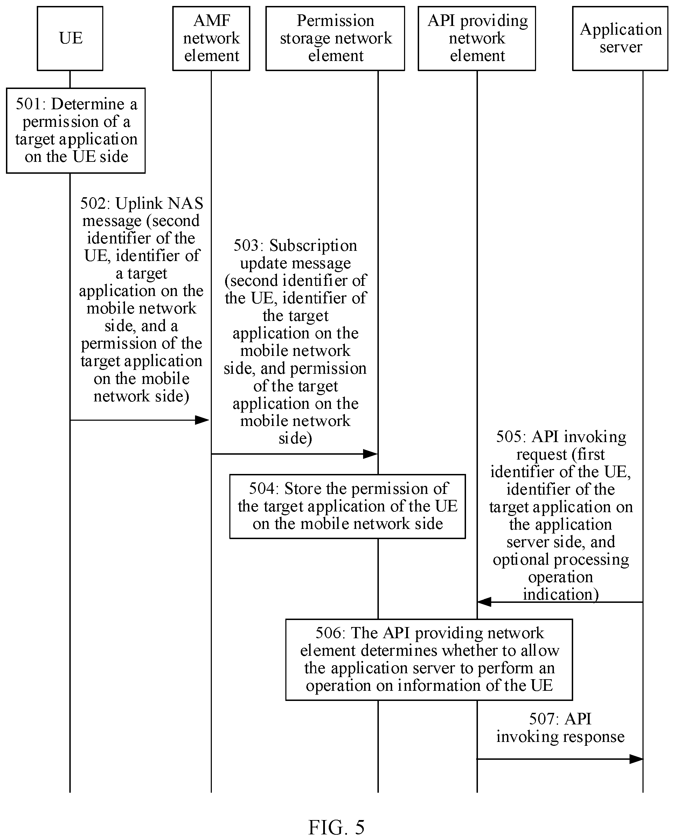

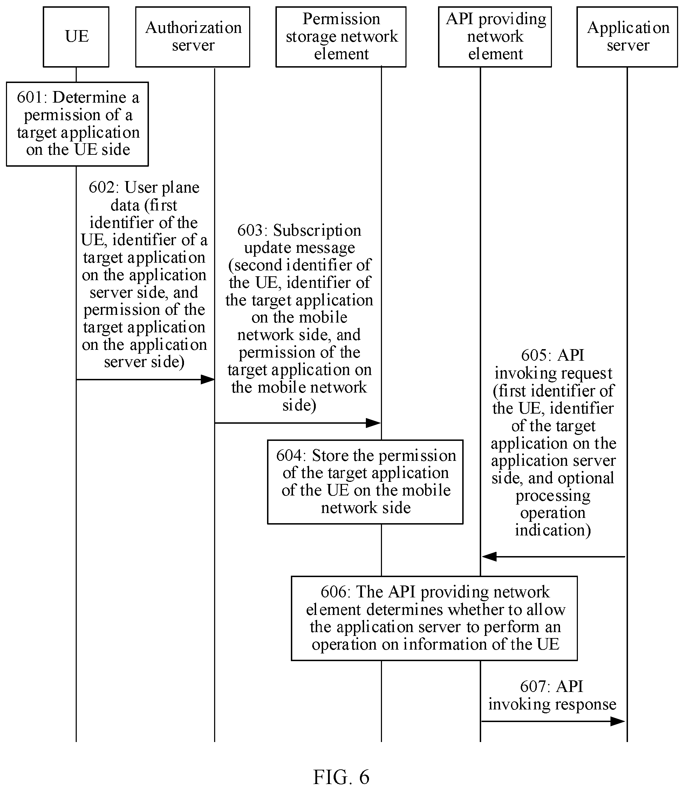

For the storage process of the permission storage network element in the foregoing manner 1 and manner 2, refer to the detailed description in the embodiment shown in FIG. 5 or FIG. 6.

Further, the API providing network element allows or forbids, based on the determining result in step 402, the application server to perform the operation on the information of the UE.

When the determining result in step 402 is yes, the API providing network element allows the application server to perform the operation on the information of the UE and performs the operation requested by the application server. For example, if the API providing network element allows the application server to read the location information of the UE, the API providing network element obtains the location information of the UE from the mobile network, and feeds back the location information of the UE to the application server. For another example, if the API providing network element allows the application server to obtain the GPSI of the UE by using the IP address of the UE, the API providing network element obtains the GPSI of the UE from the mobile network by using the IP address of the UE, and feeds back the GPSI of the UE to the application server.

When the determining result in step 402 is no, the API providing network element forbids the application server to perform the operation on the information of the UE, and rejects the operation requested by the application server.

Step 403: The API providing network element sends an API invoking response to the application server. Correspondingly, the application server receives the API invoking response from the API providing network element.

When the API providing network element allows the application server to perform the operation on the information of the UE, the API providing network element performs the operation requested by the application server, and indicates, by using the invoking response, that the API invoking request is successfully performed. Optionally, if the API providing network element further feeds back some information to the application server, the API invoking response may carry the fed-back information, for example, the location information of the UE or the GPSI of the UE. Optionally, the API invoking response may indicate that the requested operation is authorized by the UE.

When the API providing network element forbids the application server to perform the operation on the information of the UE, the API invoking response may carry a rejection cause value, where the rejection cause value indicates that the operation requested by the application server fails to be authorized.

In the embodiment shown in FIG. 4, when receiving the API invoking request from the application server, the API providing network element determines, based on the identifier, carried in the API invoking request, of the target application on the application server side and the first identifier of the UE, whether to allow the application server to perform the operation on the information of the UE, so that the target application needs to obtain the authorization of the UE before performing an operation on the information of the UE through the mobile network, which can prevent the information of the UE from being abused and lower the leakage risk of the information of the UE, thereby improving the information security.

FIG. 5 is a schematic flowchart of a method for invoking an API according to an embodiment of this application. For parts in FIG. 5 that are the same as or similar to those in FIG. 4, refer to the corresponding description in FIG. 4. The process shown in FIG. 5 may include but is not limited to the following steps:
Step 501: UE determines a permission of a target application on the UE side.

The UE determines the permission of the target application on the UE side. For example, the UE determines whether a shopping App1 on the UE is allowed to read location information of the UE.

In an implementation, a target application layer of the UE obtains a first input result from the user, and transmits the first input result to a system layer of the UE. The system layer of the UE transmits a second input result to a NAS of the UE.

The target application layer of the UE may be understood as a target application level of the UE. For example, a user inputs a permission selection on a display interface of the target application.

The system layer of the UE may be understood as a system level of the UE, for example, an Android system level. The user may modify, add, or set the permission of the target application at the system layer.

The NAS of the UE may be understood as a layer for transmitting a NAS message. For example, when the UE directly communicates with an AMF network element, the NAS message may be transmitted through the NAS.

The target application layer of the UE obtains the first input result from the user, for example, a selection result input by the user in a permission selection dialog box output by the UE when the user installs and starts the target application on the UE. For example, when the user installs and starts the shopping Appl, the UE outputs the permission selection dialog box, and the user inputs the selection result in the permission selection dialog box. The selection result is the first input result.

The first input result and the second input result may be the same or may be different. Optionally, the first input result may be represented in a form of a correspondence between an identifier of the target application on the UE side and the permission of the target application on the UE side. The second input result may be represented in a form of a correspondence between an identifier of the target application on a mobile network side and a permission of the target application on the mobile network side. Optionally, the system layer or the NAS may convert the identifier of the target application on the UE side into the identifier of the target application on the mobile network side, and convert the permission of the target application on the UE side into the permission of the target application on the mobile network side.

In another implementation, the system layer of the UE obtains an input result from the user, and transmits the input result to the NAS.

The system layer of the UE obtains the input result from the user. For example, the user opens a setting interface on the UE, and inputs a permission selection instruction for a target application on the setting interface, so that the system layer of the UE can obtain the input result from the user. The input result may be represented in a form of a correspondence between the identifier of the target application on the UE side and the permission of the target application on the UE side. For another example, the user edits an SMS message for a target application. Content of the SMS message includes an input result, and the input result may be represented in a form of a correspondence between an identifier of the target application on the UE side and a permission of the target application on the UE side. The user sends the SMS message to the system layer.

Optionally, the system layer or the NAS may convert the identifier of the target application on the UE side into the identifier of the target application on the mobile network side, and convert the permission of the target application on the UE side into the permission of the target application on the mobile network side.

Step 502: The UE sends an uplink NAS message to the AMF network element. Correspondingly, the AMF network element receives the uplink NAS message from the UE.

The uplink NAS message may be an uplink NAS transmission message, and includes the identifier of the target application on the mobile network side and the permission of the target application on the mobile network side. There may be one or more identifiers of the target application on the mobile network side that are included in the uplink NAS message, and there may be one or more permissions of the target application on the mobile network side that are included in the uplink NAS message. The identifier of the target application on the mobile network side and the permission of the target application on the mobile network side are reported in pairs. That is, if identifiers of N target applications on the mobile network side are reported, the permissions, on the mobile network side, of the target applications respectively corresponding to the identifiers of the N target applications on the mobile network side are also reported. N is a positive integer greater than 1.

Optionally, the uplink NAS message further includes a second identifier of the UE.

Optionally, the uplink NAS message further includes first permission indication information indicating updating of the permission of the UE on the mobile network side by the AMF network element.

Step 503: The AMF network element sends a subscription update message to the permission storage network element. Correspondingly, the permission storage network element receives the subscription update message from the AMF network element.

Optionally, when receiving the first permission indication information, the AMF network element sends the subscription update message to the permission storage network element.

Optionally, the subscription update message indicates updating of the permission of the UE on the mobile network side by the permission storage network element, and is specifically used to indicate updating of the permission of the target application of the UE on the mobile network side. The target application may be a target application identified by the identifier of the target application on the mobile network side. The subscription update message includes the second identifier of the UE, the identifier of the target application on the mobile network side, and the permission of the target application on the mobile network side.

Optionally, after receiving the uplink NAS message, the AMF network element may obtain the second identifier of the UE from context information of the UE based on a link identifier (for example, an AMF UE NGAP ID or a RAN UE NGAP ID) in an N2 message that carries the NAS message.

Optionally, the AMF network element obtains the second identifier of the UE from the uplink NAS message.

Optionally, the subscription update message further includes second permission indication information indicating updating of the permission of the UE on the mobile network side by the permission storage network element.

Step 504: The permission storage network element stores the permission of the target application of the UE on the mobile network side.

Optionally, the permission storage network element stores the permission of the target application of the UE on the mobile network side based on the second permission indication information. The target application is a target application identified by the identifier of the target application on the mobile network side.

Optionally, the permission storage network element stores the identifier of the target application on the mobile network side and the permission of the target application on the mobile network side into the context information corresponding to the second identifier of the UE.

Step 505: The application server sends an API invoking request to the API providing network element. Correspondingly, the API providing network element receives the API invoking request from the application server.

Step 506: The API providing network element determines whether to allow the application server to perform an operation on the information of the UE.

Step 507: The API providing network element sends an API invoking response to the application server. Correspondingly, the application server receives the API invoking response from the API providing network element.

For a specific implementation process of step 505 to step 507, refer to the detailed description of step 401 to step 403 in the embodiment shown in FIG. 4, and details are not described herein again.

In the embodiment shown in FIG. 5, the UE triggers, by using the AMF network element, the permission storage network element to store the permission of the target application of the UE on the mobile network side, so that when receiving the API invoking request from the application server, the API providing network element may obtain an authorization result or storage information from the permission storage network element, and further determine whether to authorize the application server to perform an operation on the information of the UE. This can prevent the information of the UE from being abused, and help lower the leakage risk of the information of the UE, thereby improving the information security.

FIG. 6 is a schematic flowchart of a method for invoking an API according to Embodiment 3 of this application. For parts in FIG. 6 that are the same as or similar to those in FIG. 4 or FIG. 5, refer to the corresponding description in FIG. 4 or FIG. 5. The process shown in FIG. 6 may include but is not limited to the following steps:

Step 601: UE determines a permission of a target application on the UE side.

The UE determines the permission of the target application on the UE side. For example, the UE determines whether a shopping App1 on the UE is allowed to read location information of the UE.

In an implementation, a first target application layer of the UE obtains a first input result from the user, and transmits the first input result to a system layer of the UE. The system layer of the UE transmits a second input result to a second target application layer of the UE. The first target application layer of the UE obtains the first input result. For example, when the user installs and starts the shopping App1, the UE outputs a permission selection dialog box, and the user inputs a selection result in the permission selection dialog box. The selection result is the first input result. For the system layer of the UE, refer to the description of the system layer of the UE in step 501, and details are not described herein again. The second target application layer of the UE may be understood as a layer that supports communication between the UE and an authorization server.

The first input result and the second input result may be the same or may be different. Optionally, the first input result may be represented in a form of an identifier of the target application on the UE side and the permission of the target application on the UE side. The second input result may be represented in a form of an identifier of the target application on an application server side and a permission of the target application on the application server side. Optionally, the system layer or the second target application layer may convert the identifier of the target application on the UE side into the identifier of the target application on the application server side, and convert the permission of the target application on the UE side into the permission of the target application on the application server side.

In another implementation, the system layer of the UE obtains an input result from the user, and transmits the input result to the target application layer. In this manner, the target application layer refers to a layer that supports the communication between the UE and the authorization server. For obtaining the input result of the user by the system layer of the UE, refer to the description thereof in step 501. Details are not described herein again.

Optionally, the system layer or the target application layer may convert the identifier of the target application on the UE side into the identifier of the target application on the application server side, and convert the permission of the target application on the UE side into the permission of the target application on the application server side.

Step 602: The UE sends user plane data to the authorization server. Correspondingly, the authorization server receives the user plane data from the UE.

The authorization server may be understood as an AF inside a mobile operator, and the application server may be understood as an AF outside the mobile operator.

The user plane data includes the identifier of the target application on the application server side and the permission of the target application on the application server side. The user plane data may be loaded in App traffic or an SMS message.

Optionally, the user plane data further includes a first identifier of the UE. The first identifier of the UE may be, for example, an IP address of the UE or a GPSI of the UE.

Optionally, the user plane data further includes third permission indication information indicating updating of the permission of the UE on the mobile network side by the authorization server.

Step 603: The authorization server sends a subscription update message to the permission storage network element. Correspondingly, the permission storage network element receives the subscription update message from the authorization server.

Optionally, when receiving the third permission indication information, the authorization server sends the subscription update message to the permission storage network element.

The subscription update message indicates updating of the permission of the UE on the mobile network side by the permission storage network element, and is specifically used to indicate updating of permission information of the target application of the UE. The target application may be a target application identified by the identifier of the target application on the application server side.

Optionally, the subscription update message includes the first identifier of the UE, the identifier of the target application on the application server side, and the permission of the target application on the application server side.

Optionally, if the identifier of the target application on the application server side is different from the identifier of the target application on the mobile network side, the authorization server converts the identifier of the target application on the application server side into the identifier of the target application on the mobile network side. If the permission of the target application on the application server side is different from the permission of the target application on the mobile network side, the authorization server converts the permission of the target application on the application server side into the permission of the target application on the mobile network side. If the first identifier of the UE is different from the second identifier of the UE, the authorization server converts the first identifier of the UE into the second identifier of the UE. Further, the subscription update message may include the second identifier of the UE, the identifier of the target application on the mobile network side, and the permission of the target application on the mobile network side.

Optionally, the subscription update message further includes fourth permission indication information indicating updating of the permission of the UE on the mobile network side by the permission storage network element.

Step 603 is an implementation. In another implementation, the authorization server invokes a subscribed and updated API enabled by the API providing network element. An input parameter of the API includes the first identifier of the UE, the identifier of the target application on the application server side, and a permission of the target application on the application server side. The API providing network element sends a subscription update message to the permission storage network element, where the subscription update message includes the first identifier of the UE, the identifier of the target application on the application server side, and the permission of the target application on the application server side. Optionally, the API providing network element converts the identifier of the target application on the application server side into the identifier of the target application on the mobile network side, converts the permission of the target application on the application server side into the permission of the target application on the mobile network side, and converts the first identifier of the UE into the second identifier of the UE. Further, the subscription update message includes the second identifier of the UE, the identifier of the target application on the mobile network side, and the permission of the target application on the mobile network side.

Step 604: The permission storage network element stores the permission of the target application of the UE on the mobile network side.

For a specific implementation process of step 604, refer to the detailed description of step 504 in the embodiment shown in FIG. 5. Details are not described herein again.

Step 605: The application server sends an API invoking request to the API providing network element. Correspondingly, the API providing network element receives the API invoking request from the application server.

Step 606: The API providing network element determines whether to allow the application server to perform an operation on the information of the UE.

Step 607: The API providing network element sends an API invoking response to the application server. Correspondingly, the application server receives the API invoking response from the API providing network element.

For a specific implementation process of step 605 to step 607, refer to the detailed description of step 401 to step 403 in the embodiment shown in FIG. 4. Details are not described herein again.

In the embodiment shown in FIG. 6, the UE triggers, by using the authorization server, the permission storage network element to store the permission of the target application of the UE on the mobile network side, so that when receiving the API invoking request from the application server, the API providing network element may obtain an authorization result or storage information from the permission storage network element, and further determine whether to authorize the application server to perform an operation on the information of the UE. This can prevent the information of the UE from being abused, and help lower the leakage risk of the information of the UE, thereby improving the information security.

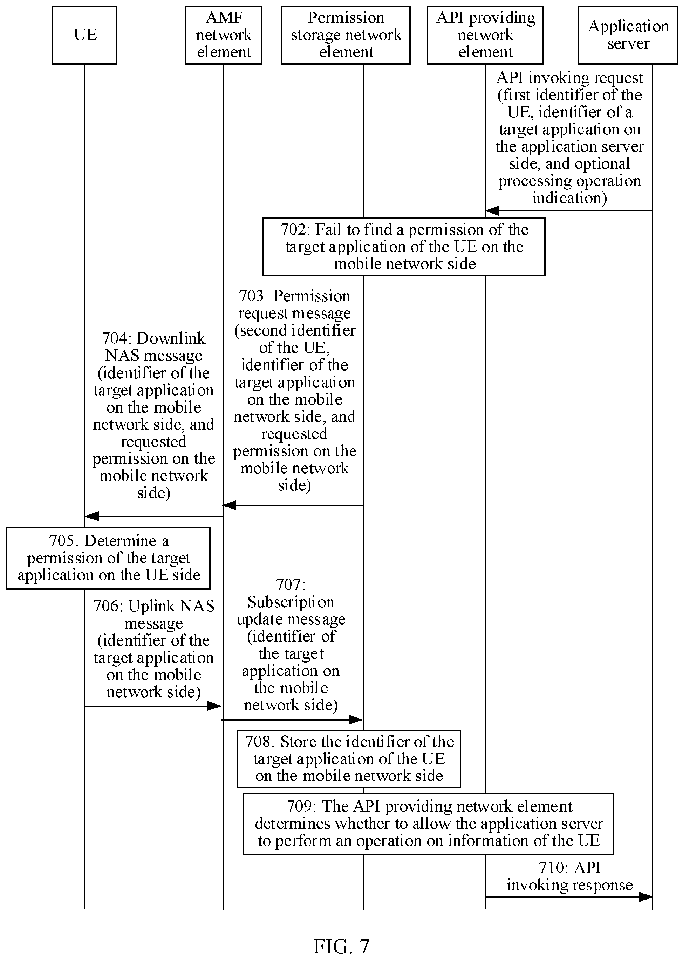

FIG. 7 is a schematic flowchart of a method for invoking an API according to Embodiment 4 of this application. For parts in FIG. 7 that are the same as or similar to those in FIG. 4 or FIG. 5 or FIG. 6, refer to the corresponding description in FIG. 4 to FIG. 6. The process shown in FIG. 7 may include but is not limited to the following steps:
Step 701: An application server sends an API invoking request to an API providing network element. Correspondingly, the API providing network element receives the API invoking request from the application server.

For a specific implementation process of step 701, refer to the detailed description of step 401 in the embodiment shown in FIG. 4. Details are not described herein again.

Step 702: Fail to find a permission of a target application of UE on the mobile network side.

For the manner 1 and manner C in step 402, the API providing network element obtains, from a permission storage network element, an authorization result or the permission of the target application of the UE on the mobile network side, to determine whether to allow the application server to perform an operation on information of the UE. The permission storage network element fails to find the permission of the target application of the UE on the mobile network side based on an authorization request sent by the API providing network element. In this case, whether to authorize the application server to perform the operation on the information of the UE fails to be determined. Therefore, the permission storage network element is triggered to request the permission of the target application of the UE on the mobile network side from the UE.

Step 703: The permission storage network element sends a permission request message to an AMF network element. Correspondingly, the AMF network element receives the permission request message from the permission storage network element.

The permission request message is used to trigger the AMF network element to request the permission of the target application of the UE on the mobile network side. The permission request message includes a second identifier of the UE, an identifier of the target application on the mobile network side, and the requested permission on the mobile network side. The requested permission on the mobile network side is the requested permission of the target application on the mobile network side. The target application is a target application identified by the identifier of the target application on the mobile network side.

The permission storage network element may perform one or more of the following operations:
converting a first identifier of the UE into the second identifier of the UE if the first identifier of the UE is different from the second identifier of the UE;
converting an identifier of the target application on an application server side into an identifier of the target application on the mobile network side if the identifier of the target application on the application server side is different from the identifier of the target application on the mobile network side; and
converting a requested permission on the application server side into the requested permission on the mobile network side if the requested permission on the application server side is different from the requested permission on the mobile network side.

Optionally, the permission request message further includes fifth authorization indication information, used to trigger the AMF network element to request the permission of the target application of the UE on the mobile network side from the UE.

Step 704: The AMF network element sends a downlink NAS message to the UE. Correspondingly, the UE receives the downlink NAS message from the AMF network element.

The downlink NAS message may be a downlink NAS transmission message, and includes the identifier of the target application on the mobile network side and the requested permission on the mobile network side. Optionally, the downlink NAS message further includes sixth authorization indication information, used to indicate feeding back of the permission of the target application of the UE on the mobile network side by the UE.

Step 705: The UE determines a permission of the target application on the UE side.

Step 706: The UE sends an uplink NAS message to the AMF network element. Correspondingly, the AMF network element receives the uplink NAS message from the UE.

The uplink NAS message includes the permission of the target application on the mobile network side, that is, the permission of the target application of the UE on the mobile network side. Optionally, the uplink NAS message in step 706 may not include the identifier of the target application on the mobile network side and the first identifier of the UE. Because the AMF network element has obtained the identifier of the target application on the mobile network side and the second identifier of the UE, the uplink NAS message does not need to carry the identifier of the target application on the mobile network side and the first identifier of the UE, thereby reducing transmission overheads.

Step 707: The AMF network element sends a subscription update message to the permission storage network element. Correspondingly, the permission storage network element receives the subscription update message from the AMF network element.

Step 708: The permission storage network element stores the permission of the target application of the UE on the mobile network side.

For a specific implementation process of step 705 to step 708, refer to the detailed description of step 501 to step 504 in the embodiment shown in FIG. 5. Details are not described herein again.

Step 709: The permission storage network element sends an authorization response to the API providing network element. Correspondingly, the API providing network element receives the authorization response from the permission storage network element.

The authorization response responds to the authorization request that is sent by the API providing network element to the permission storage network element, and includes the permission of the target application on the mobile network side. Optionally, the authorization response further includes the second identifier of the UE, and the identifier of the target application on the mobile network side.

Step 710: The API providing network element determines, based on the permission of the target application on the mobile network side, whether to allow the application server to perform the operation on the information of the UE.

The API providing network element determines, based on the permission of the target application on the mobile network side in step 709, whether to allow the application server to perform the operation on the information of the UE. Specifically, the API providing network element determines, based on the permission of the target application on the mobile network side and a specific API function or operation indication information carried in the API invoking request, whether to allow the application server to perform the operation on the information of the UE.

Step 711: The API providing network element sends an API invoking response to the application server. Correspondingly, the application server receives the API invoking response from the API providing network element.

When the API providing network element allows the authorized application server to perform the operation on the information of the UE, the API invoking response may indicate that the requested operation is authorized by the UE. Optionally, if the API providing network element further feeds back some information to the application server, the API invoking response may carry the fed-back information, for example, location information of the UE or a GPSI of the UE.

When the API providing network element forbids the authorized application server to perform the operation on the information of the UE, the API invoking response may carry a rejection cause value, where the rejection cause value indicates that the operation requested by the application server fails to be authorized.

In the embodiment shown in FIG. 7, when the permission storage network element fails to find the permission of the target application of the UE on the mobile network side, the permission storage network element triggers obtaining of the permission of the target application of the UE on the mobile network side, so that the API providing network element determines whether to authorize the application server to perform the operation on the information of the UE. This helps lower a leakage risk of the information of the UE, thereby improving information security.

A difference between FIG. 7 and FIG. 5 and FIG. 6 lies in that, in FIG. 5 and FIG. 6, the permission storage network element first stores the permission of the UE for the target application on the mobile network side, and when receiving the API invoking request, the API providing network element obtains the authorization result or storage information from the permission storage network element, and further determines whether to authorize the application server to perform the operation on the information of the UE. However, in FIG. 7, when receiving the API invoking request, the API providing network element cannot find the permission of the target application of the UE on the mobile network side. The permission storage network element triggers obtaining of the permission of the target application of the UE on the mobile network side. When obtaining the permission of the target application on the mobile network side, the API providing network element determines, based on the permission of the target application on the mobile network side, whether to allow the application server to perform the operation on the information of the UE.

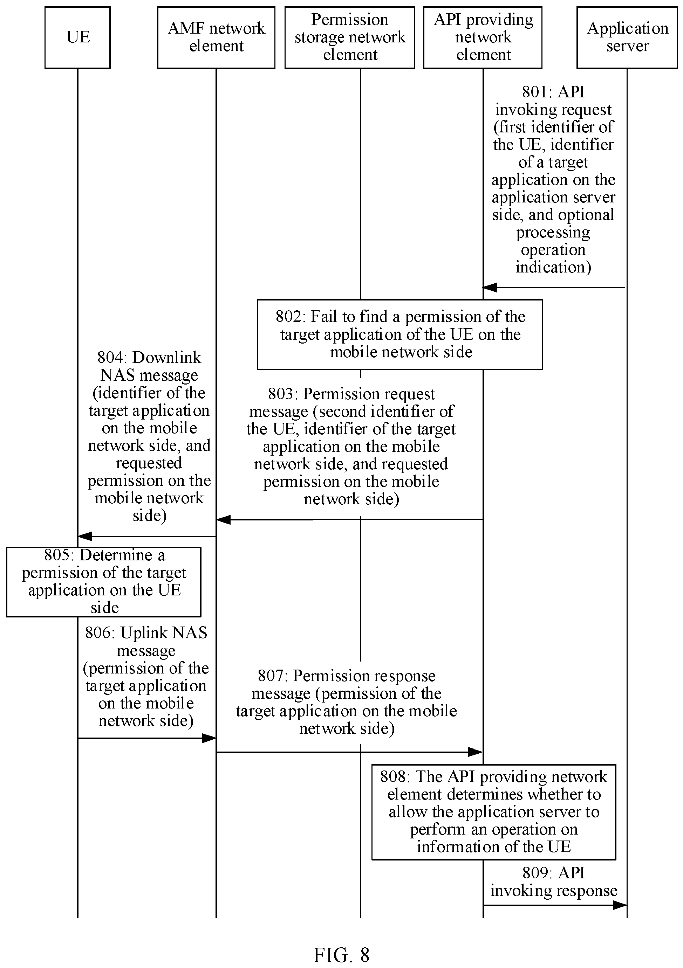

FIG. 8 is a schematic flowchart of a method for invoking an API according to Embodiment 5 of this application. For parts in FIG. 8 that are the same as or similar to those in any one of FIG. 4 to FIG. 7, refer to the description in FIG. 4 to FIG. 7. The process shown in FIG. 8 may include but is not limited to the following steps:
Step 801: An application server sends an API invoking request to an API providing network element. Correspondingly, the API providing network element receives the API invoking request from the application server.

For a specific implementation process of step 801, refer to the detailed description of step 401 in the embodiment shown in FIG. 4. Details are not described herein again.

Step 802: Fail to find a permission of a target application of UE on a mobile network side.

For the manner A and manner B in step 402, the API providing network element fails to obtain the permission of the target application of the UE on the mobile network side based on storage information obtained from a permission storage network element. In this case, the API providing network element triggers requesting of the permission of the target application of the UE on the mobile network side from an AMF network element.

Step 803: The API providing network element sends a permission request message to the AMF network element. Correspondingly, the AMF network element receives the permission request message from the API providing network element.

The permission request message is used to trigger the AMF network element to request the permission of the target application of the UE on the mobile network side. The permission request message includes a second identifier of the UE, an identifier of the target application on the mobile network side, and the requested permission on the mobile network side.

The API providing network element may perform one or more of the following operations:
(1). converting a first identifier of the UE into the second identifier of the UE if the first identifier of the UE is different from the second identifier of the UE;
(2). converting an identifier of the target application on an application server side into an identifier of the target application on the mobile network side if the identifier of the target application on the application server side is different from the identifier of the target application on the mobile network side; and
(3). converting requested permission on the application server side into the requested permission on the mobile network side if the requested permission on the application server side is different from the requested permission on the mobile network side.

Optionally, the permission request message further includes fifth authorization indication information, used to trigger the AMF network element to request the permission of the target application of the UE on the mobile network side from the UE.

Step 804: The AMF network element sends a downlink NAS message to the UE. Correspondingly, the UE receives the downlink NAS message from the AMF network element.

For a specific implementation process of step 804, refer to the detailed description of step 704 in the embodiment shown in FIG. 7. Details are not described herein again.

Step 805: The UE determines a permission of the target application on the UE side.

Step 806: The UE sends an uplink NAS message to the AMF network element. Correspondingly, the AMF network element receives the uplink NAS message from the UE.

For a specific implementation process of step 805 to step 806, refer to the detailed description of step 501 to step 502 in the embodiment shown in FIG. 5. Details are not described herein again.

Step 807: The AMF network element sends a permission response message to the API providing network element. Correspondingly, the API providing network element receives the permission response message from the AMF network element.

The permission response message includes the permission of the target application on the mobile network side. Optionally, the authorization response further includes the second identifier of the UE, and the identifier of the target application on the mobile network side.

Optionally, the AMF network element may also perform step 707, so that a permission storage unit stores the permission of the target application of the UE on the mobile network side.

Step 808: The API providing network element determines, based on the permission of the target application on the mobile network side, whether to allow the application server to perform the operation on the information of the UE.

Step 809: The API providing network element sends an API invoking response to the application server. Correspondingly, the application server receives the API invoking response from the API providing network element.

For a specific implementation process of step 808 to step 809, refer to the detailed description of step 710 to step 711 in the embodiment shown in FIG. 7. Details are not described herein again.

In the embodiment shown in FIG. 8, when the permission of the target application of the UE on the mobile network side fails to be found, the API providing network element triggers obtaining of the permission of the target application of the UE on the mobile network side, so that the API providing network element determines whether to authorize the application server to perform the operation on the information of the UE. This helps lower a leakage risk of the information of the UE and improve information security.

A difference between FIG. 8 and FIG. 7 lies in that in FIG. 7, the permission storage network element triggers the obtaining of the permission of the target application of the UE on the mobile network side, while in FIG. 8, the API providing network element triggers the obtaining of the permission of the target application of the UE on the mobile network side.

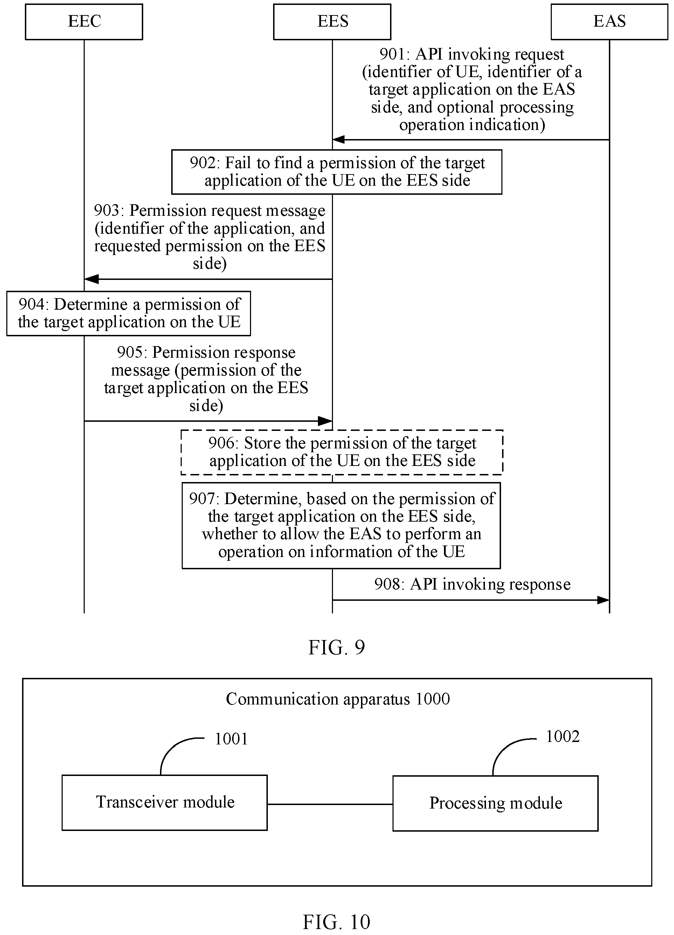

In FIG. 5 to FIG. 8, an application server requests to operate information of UE by invoking an exposed API provided by an API providing network element in a 5G core network. For a method for invoking an API in a network architecture of 5G MEC, refer to FIG. 9. The process shown in FIG. 9 may include but is not limited to the following steps:
Step 901: An EAS sends an API invoking request to an EES. Correspondingly, the EES receives the API invoking request from the EAS.

The sending of the API invoking request by the EAS to the EES is similar to the sending of the API invoking request by the application server to the API providing network element in FIG. 4. Reference may be made to the detailed description of the sending of the API invoking request by the application server to the API providing network element in FIG. 4, and details are not described herein again.

Step 902: The EES fails to find a permission of a target application of UE on an EES side.

If the EES fails to find the permission of the target application of the UE on the EES side based on one or more of an identifier of the UE, an identifier of the target application, or the processing operation indication, step 903 is triggered to be performed.

The identifier of the UE may be an IP address or a GPSI of the UE, and the identifier of the target application may be an EAS ID, an AF ID, or the like.

Step 903: The EES sends a permission request message to the EEC. Correspondingly, the EEC receives the permission request message from the EES.

The permission request message is for requesting the permission of the target application of the UE on the EES side. The permission request message includes the identifier of the target application and the requested permission on the EES side. The EES converts (for example, by using an API or by a processing operation indication) a requested operation into the requested permission on the EES side.

Optionally, the permission request message further includes authorization indication information, and is for requesting the permission of the target application of the UE on the EES side.

Step 904: The UE determines a permission of the target application on the UE side.

In an implementation, a target application layer (for example, the EEC) transmits the identifier of the target application and the requested permission to a system layer. The system layer outputs a dialog box for waiting for a user input. The dialog box displays a user being requested to input a permission selection for an operation for the target application. After the user inputs the permission selection, the system layer transmits a user input result to the target application layer.

In another implementation, the target application layer (for example, an EEC) triggers the UE to output the dialog box, to wait for the user to input the permission selection for an operation for the target application in the dialog box, so that the target application layer obtains the user input result.

Step 905: The EEC sends a permission response message to the EES. Correspondingly, the EES receives the permission response message from the EEC.

The permission response message includes the permission of the target application on the UE side.

Optionally, in step 906, the EES stores the permission of the target application of the UE on the EES side. The EES stores the permission of the target application of the UE on the EES side, so that when receiving a same API invoking request next time, the EES may directly perform determining based on the permission of the target application on the EES side, and does not need to obtain the permission of the target application from the EEC again.

Optionally, if the permission of the target application on the UE side is different from the permission of the target application on the EES side, the EES may convert a terminal device of the target application into the permission of the target application on the EES side. Optionally, the EES stores the permission of the target application of the UE on the EES.

The storing of the permission of the target application of the UE on the EES side by the EES is similar to the storing of the permission of the target application of the UE on the mobile network side by the permission storage network element in the embodiment shown in FIG. 5. Reference may be made to the corresponding description in FIG. 5 and details are not described herein again.

Step 907: The EES determines, based on the permission of the target application on the EES side, whether to allow the EAS to perform an operation on the information of the UE.

Step 908: The EES sends an API invoking response to the EAS. Correspondingly, the EAS receives the API invoking response from the EES.

Step 907 to step 908 are similar to step 710 to step 711 in the embodiment shown in FIG. 7. Reference may be made to the detailed description of step 710 to step 711, and details are not described herein again.

In the embodiment shown in FIG. 9, when receiving the API invoking request and failing to find the permission of the target application of the UE on the EES side, the EES obtains the permission of the target application of the UE on the EES side from the EEC, and then the EES may determine whether to authorize the EAS to perform the operation on the information of the UE. This helps reduce a leakage risk of the information of the UE and improve information security.

In correspondence to the methods provided in the foregoing method embodiments, an embodiment of this application further provides a corresponding apparatus. The apparatus includes corresponding modules configured to perform the foregoing embodiments. The module may be software, hardware, or a combination of software and hardware.

FIG. 10 is a schematic diagram of a structure of a communication apparatus according to this application.

FIG. 10 is a schematic diagram of a structure of a communication apparatus according to this application. The communication apparatus 1000 shown in FIG. 10 includes a transceiver module 1001 and a processing module 1002.

In a design, the apparatus 1000 is an API providing network element.

For example, the transceiver module 1001 is configured to receive an API invoking request for a target application from an application server, where the API invoking request is for requesting to operate information of a terminal device, and the API invoking request includes a first identifier of the terminal device and an identifier of the target application on the application server side.

The processing module 1002 is configured to: obtain an authorization result based on the first identifier of the terminal device and the identifier of the target application on the application server side, where the authorization result indicates whether the application server is allowed to operate information of the terminal device; and determines, based on the authorization result, whether to allow the application server to perform an operation on the information of the terminal device.

This example is used for implementing functions of the API providing network element in the embodiments shown in FIG. 4 to FIG. 8.

In a design, the apparatus 1000 is a permission storage network element.

For example, the transceiver module 1001 is configured to receive an authorization request from an API providing network element, where the authorization request includes a second identifier of a terminal device, an identifier of a target application on a mobile network side, and operation indication information indicating an operation on information of the terminal device, the authorization request is for requesting an authorization result, and the authorization result indicates whether an application server is allowed to perform an operation on the information of the terminal device.

The processing module 1002 is configured to obtain the authorization result based on the authorization request and storage permission information, where the storage permission information includes permission of the target application of the terminal device on the mobile network side.

The transceiver module 1001 is further configured to send an authorization response to the API providing network element, where the authorization response includes the authorization result.

This example is used for implementing functions of the permission storage network element in the embodiments shown in FIG. 4 to FIG. 8.

In a design, the apparatus 1000 is a terminal device.

For example, the processing module 1002 is configured to: determine a permission of the target application on a terminal side; convert an identifier of the target application on the terminal side into an identifier of the target application on the mobile network side, and convert a permission of the target application on the terminal side into a permission of the target application on the mobile network side.

The transceiver module 1001 is configured to send an uplink non-access stratum NAS message to an access and mobility management function network element, where the uplink NAS message includes a second identifier of the terminal device, the identifier of the target application on the mobile network side, and the permission of the target application on the mobile network side.

This example is used for implementing functions of the UE 1 in the embodiments shown in FIG. 5 to FIG. 8.

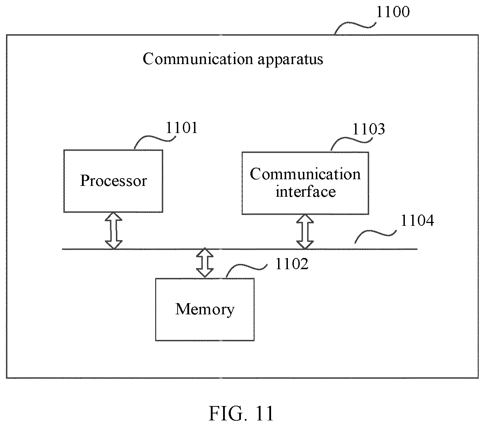

FIG. 11 is a schematic diagram of a structure of another communication apparatus according to this application. A communication apparatus 1100 shown in FIG. 11 includes at least one processor 1101 and a memory 1102, and optionally, may further include a communication interface 1103.

The memory 1102 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1102 is any other medium that can be used to carry or store expected program code in an instruction form or a data structure form and that can be accessed by a computer, but is not limited thereto. The memory 1102 may be a combination of the foregoing memories.

In this embodiment of this application, a specific connection medium between the processor 1101 and the memory 1102 is not limited. In this embodiment of this application, the memory 1102 and the processor 1101 are connected through a bus 1104. The bus 1104 is represented by using a bold line in the figure, and a connection manner between other parts is merely used as an example for description, and does not limit this application. The bus 1104 may be divided into an address bus, a data bus, a control bus, and the like. For ease of representation, only one bold line is used to represent the bus in FIG. 11, but this does not mean that there is only one bus or only one type of bus.

The processor 1101 may have a data transceiver function, and can communicate with another device. In the apparatus shown in FIG. 11, an independent data transceiver module, for example, the communication interface 1103, may also be disposed and is configured to receive and send data. When communicating with another device, the processor 1101 may transmit data through the communication interface 1103.

In an example, when the API providing network element uses the form shown in FIG. 11, the processor in FIG. 11 may invoke computer-executable instructions stored in the memory 1102, to cause the API providing network element to perform the method performed by the API providing network element in any one of the foregoing method embodiments.

In an example, when the permission storage network element uses the form shown in FIG. 11, the processor in FIG. 11 may invoke the computer-executable instructions stored in the memory 1102, to cause the permission storage network element to perform the method performed by the permission storage network element in any one of the foregoing method embodiments.

Specifically, functions/implementation processes of the processing module and the transceiver module in FIG. 10 may be implemented by the processor 1101 in FIG. 11 invoking the computer-executable instructions stored in the memory 1102. Alternatively, functions/implementation processes of the processing module in FIG. 10 may be implemented by the processor 1101 in FIG. 11 by invoking the computer-executable instructions stored in the memory 1102, and functions/implementation processes of the transceiver module in FIG. 10 may be implemented through the communication interface 1103 in FIG. 11.

An embodiment of this application further provides a system for invoking an API. The system may include the API providing network element and the permission storage network element in FIG. 4 to FIG. 8.

An embodiment of this application further provides a system for invoking an API. The system may include the EES and the EAS in FIG. 9.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the functions for corresponding application, but it should not be considered that the implementation goes beyond the scope of embodiments of this application.

The solutions described in this application may be implemented in various manners. For example, the technologies may be implemented by hardware, software, or a combination thereof. For hardware implementation, a processing unit configured to execute these technologies at a communication apparatus (for example, a base station, a terminal, a network entity, a core network element, or a chip) may be implemented in one or more general-purpose processors, digital signal processors (digital signal processor, DSP), digital signal processor components, or application-specific integrated circuits (application-specific integrated circuit, ASIC), programmable logic devices, field programmable gate arrays (field programmable gate array, FPGA), or another programmable logic apparatus, discrete gate or transistor logic, discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

It may be understood that the memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, RAMs in many forms are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on a computer, the processes or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It may be understood that "an embodiment" mentioned in the entire specification means that particular features, structures, or characteristics related to the embodiment are included in at least one embodiment of this application. Therefore, embodiments in the entire specification are not necessarily same embodiments. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" are usually used interchangeably in this specification. The term "and/or" in this specification describes only an association relationship between associated objects and represents that three relationships may exist. For example, A and/or B may represent the following three cases: only A exists, both A and B exist, and only B exists. A may be singular or plural, and B may be singular or plural.

"Predefine" in this application may be understood as "define", "predefine", "store", "pre-store", "pre-negotiate", "pre-configure", "solidify", or "pre-burn".

A person of ordinary skill in the art may understand that, for the purpose of convenient and brief description, for a detailed working process of the foregoing system, apparatus, and unit, refer to a corresponding process in the foregoing method embodiments. Details are not described herein again.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method according to an internal logical relationship thereof. The foregoing implementations of this application are not intended to limit the protection scope of this application.

The foregoing descriptions are merely specific implementations of this application, but are not intended to limit the protection scope of this application.

## Claims

1. A method for invoking an API, comprising:
receiving (401), by an application programming interface, API, providing network element (302), an API invoking request for a target application from an application server (301), wherein the API invoking request is for requesting to operate information of a terminal device, and the API invoking request comprises a first identifier of the terminal device and an identifier of the target application on the application server side;
obtaining, by the API providing network element (302), an authorization result based on the first identifier of the terminal device and the identifier of the target application on the application server side, wherein the authorization result indicates whether the application server (301) is allowed to operate the information of the terminal device;
determining (402), by the API providing network element (302) based on the authorization result, whether to allow the application server (301) to perform an operation on the information of the terminal device; and
wherein the obtaining, by the API providing network element (302), an authorization result based on the first identifier of the terminal device and the identifier of the target application on the application server side comprises:
sending, by the API providing network element (302), an authorization request to a permission storage network element (303), wherein the authorization request comprises a second identifier of the terminal device and an identifier of the target application on a mobile network side, and operation indication information indicating the operation on the information of the terminal device; and
receiving, by the API providing network element (302), an authorization response from the permission storage network element (303), wherein the authorization response comprises the authorization result.

2. The method according to claim 1, wherein the obtaining, by the API providing network element (302), an authorization result based on the first identifier of the terminal device and the identifier of the target application on the application server side comprises:
sending, by the API providing network element (302), an authorization request to a permission storage network element (303), wherein the authorization request comprises a second identifier of the terminal device;
receiving, by the API providing network element, an authorization response from the permission storage network element (303), wherein the authorization response comprises permissions of all applications corresponding to the terminal device on a mobile network side; and
determining, by the API providing network element (302), the authorization result based on the identifier of the target application on the application server side, the permissions of all the applications corresponding to the terminal device on the mobile network side, and operation indication information indicating the operation on the information of the terminal device.

3. The method according to claim 1, wherein the obtaining, by the API providing network element (302), an authorization result based on the first identifier of the terminal device and the identifier of the target application on the application server side comprises:
sending, by the API providing network element (302), an authorization request to a permission storage network element (303), wherein the authorization request comprises an identifier of the target application on a mobile network side;
receiving, by the API providing network element (302), an authorization response from the permission storage network element (303), wherein the authorization response comprises permissions of all terminal devices corresponding to the target application on the mobile network side; and
determining, by the API providing network element (302), the authorization result based on the first identifier of the terminal device, the permissions of all the terminal devices corresponding to the target application on the mobile network side, and operation indication information indicating the operation on the information of the terminal device.

4. The method according to claim 1, wherein the obtaining, by the API providing network element (302), an authorization result based on the first identifier of the terminal device and the identifier of the target application on the application server side comprises:
sending, by the API providing network element (302), an authorization request to a permission storage network element (303), wherein the authorization request comprises a second identifier of the terminal device and an identifier of the target application on a mobile network side;
receiving, by the API providing network element (302), an authorization response from the permission storage network element (303), wherein the authorization response comprises a permission of the target application of the terminal device on the mobile network side; and
determining, by the API providing network element (302), the authorization result based on the permission of the target application of the terminal device on the mobile network side and operation indication information indicating the operation on the information of the terminal device.

5. The method according to any one of claims 1 to 4, wherein when the application server (301) is allowed to perform the operation on the information of the terminal device, the API providing network element sends (403) an API invoking response to the application server (301), wherein the API invoking response indicates that the API invoking request is successfully performed.

6. The method according to any one of claims 1 to 4, wherein when the application server (301) is forbidden to perform the operation on the information of the terminal device, the API providing network element sends (403) an API invoking response to the application server (301), wherein the API invoking response indicates that the API invoking request is rejected.

7. The method according to claim 6, wherein the API invoking response comprises a rejection cause, and the rejection cause indicates that the operation requested by the application server (301) fails to be authorized.

8. The method according to any one of claims 1 to 7, wherein the method further comprises:
sending (803), by the API providing network element (302), a permission request message to an access and mobility management function network element, wherein the permission request message comprises the second identifier of the terminal device and the identifier of the target application on the mobile network side;
receiving, by the API providing network element (302), a permission response message from the access and mobility management function network element, wherein the permission response message comprises the permission of the target application of the terminal device on the mobile network side; and
determining (808), by the API providing network element (302) based on the permission of the target application of the terminal device on the mobile network side and the operation indication information, whether to allow the application server (301) to perform the operation on the information of the terminal device, wherein the operation indication information indicates the operation on the information of the terminal device.

9. A method for invoking an API, comprising:
receiving, by a permission storage network element (303), an authorization request from an API providing network element (302), wherein the authorization request comprises a second identifier of a terminal device, an identifier of a target application on a mobile network side, and operation indication information indicating an operation on information of the terminal device;
obtaining, by the permission storage network element (303), an authorization result based on the second identifier of the terminal device and the identifier of the target application on the mobile network side, the operation indication information, and storage permission information, wherein the authorization result indicates whether the information of the terminal device is allowed to be operated, and the storage permission information comprises a permission of the target application of the terminal device on the mobile network side;
sending, by the permission storage network element (303), an authorization response to the API providing network element (302), wherein the authorization response comprises the authorization result; and;
receiving (503), by the permission storage network element (303), a subscription update message, wherein the subscription update message comprises the second identifier of the terminal device and the identifier of the target application on the mobile network side, and the permission of the target application on the mobile network side; and
storing, by the permission storage network element (303), the second identifier of the terminal device and the identifier of the target application on the mobile network side, and the permission of the target application on the mobile network side into the storage permission information.

10. The method according to claim 9, wherein the subscription update message further comprises permission indication information indicating updating of a network permission of the terminal device; and
the storing, by the permission storage network element (303), the second identifier of the terminal device and the identifier of the target application on the mobile network side, and the permission of the target application on the mobile network side into the storage permission information comprises:
storing, by the permission storage network element (303), the second identifier of the terminal device and the identifier of the target application on the mobile network side, and the permission of the target application on the mobile network side into the storage permission information based on the permission indication information.

11. A method for invoking an API, comprising:
sending (701), by an application server (301), an API invoking request for a target application to an API providing network element (302), wherein the API invoking request is for requesting to operate information of a terminal device, and the API invoking request comprises a first identifier of the terminal device and an identifier of the target application on the application server side;
obtaining, by the API providing network element (302), an authorization result or the permission of the target application of the terminal device on the mobile network side based on the first identifier of the terminal device and the identifier of the target application on the application server side from a permission storage network element (303); wherein the permission storage network element (303) fails (702) to find the permission of the target application of the terminal device on the mobile network side; and
receiving (710), by the application server (301), an API invoking response from the API providing network element (302), wherein the API invoking response indicates that the API invoking request is successfully performed or is rejected; wherein when the API invoking response indicates that the API invoking request is rejected, the API invoking response comprises a rejection cause, and the rejection cause indicates that the operation requested by the application server (301) fails to be authorized.

12. An application programming interface, API, providing network element (302, 1000), comprising means for carrying out the steps according to any one of claims 1 to 8.

13. A permission storage network element (303, 1000), comprising means for carrying out the steps according to any one of claims 9 to 10.

## Patentansprüche

1. Verfahren zum Aufrufen einer API, Folgendes umfassend:
Empfangen (401) einer API-Aufrufanfrage für eine Zielanwendung von einem Anwendungsserver (301) durch ein eine Anwendungsprogrammierungsschnittstelle, API, bereitstellendes Netzwerkelement (302), wobei die API-Aufrufanfrage zum Anfragen vorgesehen ist, Informationen eines Endgeräts zu verarbeiten, und die API-Aufrufanfrage eine erste Kennung des Endgeräts und eine Kennung der Zielanwendung auf Seiten des Anwendungsservers umfasst,
Erzielen eines Autorisierungsergebnisses durch das die API bereitstellende Netzwerkelement (302), basierend auf der ersten Kennung des Endgeräts und der Kennung der Zielanwendung auf Seiten des Anwendungsservers, wobei das Autorisierungsergebnis angibt, ob es dem Anwendungsserver (301) gestattet ist, die Informationen des Endgeräts zu verarbeiten,
Bestimmen (402), ob es dem Anwendungsserver (301) gestattet werden soll, ein Verarbeiten der Informationen des Endgeräts durchzuführen, durch das die API bereitstellende Netzwerkelement (302), basierend auf dem Autorisierungsergebnis, und
wobei das Erzielen eines Autorisierungsergebnisses durch das die API bereitstellende Netzwerkelement (302), basierend auf der ersten Kennung des Endgeräts und der Kennung der Zielanwendung auf Seiten des Anwendungsservers, Folgendes umfasst:
Senden einer Autorisierungsanfrage durch das die API bereitstellende Netzwerkelement (302) an ein erlaubnisspeicherndes Netzwerkelement (303), wobei die Autorisierungsanfrage eine zweite Kennung des Endgeräts und eine Kennung der Zielanwendung auf Seiten eines Mobilfunknetzes umfasst und Verarbeitungsangabeinformationen, die die Verarbeitung der Informationen des Endgeräts angeben, und
Empfangen einer Autorisierungsantwort durch das die API bereitstellende Netzwerkelement (302) von dem erlaubnisspeichernden Netzwerkelement (303), wobei die Autorisierungsantwort das Autorisierungsergebnis umfasst.

2. Verfahren nach Anspruch 1, wobei das Erzielen eines Autorisierungsergebnisses durch das die API bereitstellende Netzwerkelement (302), basierend auf der ersten Kennung des Endgeräts und der Kennung der Zielanwendung auf Seiten des Anwendungsservers, Folgendes umfasst:
Senden einer Autorisierungsanfrage durch das die API bereitstellende Netzwerkelement (302) an ein erlaubnisspeicherndes Netzwerkelement (303), wobei die Autorisierungsanfrage eine zweite Kennung des Endgeräts umfasst,
Empfangen einer Autorisierungsantwort durch das die API bereitstellende Netzwerkelement von dem erlaubnisspeichernden Netzwerkelement (303), wobei die Autorisierungsantwort Erlaubnisse aller Anwendungen umfasst, die dem Endgerät auf Seiten eines Mobilfunknetzes entsprechen, und
Bestimmen des Autorisierungsergebnisses durch das die API bereitstellende Netzwerkelement (302), basierend auf der Kennung der Zielanwendung auf Seiten des Anwendungsservers, den Erlaubnissen aller Anwendungen, die dem Endgerät auf Seiten des Mobilfunknetzes entsprechen, und Verarbeitungsangabeinformationen, welche die Verarbeitung der Informationen des Endgeräts angeben.

3. Verfahren nach Anspruch 1, wobei das Erzielen eines Autorisierungsergebnisses durch das die API bereitstellende Netzwerkelement (302), basierend auf der ersten Kennung des Endgeräts und der Kennung der Zielanwendung auf Seiten des Anwendungsservers, Folgendes umfasst:
Senden einer Autorisierungsanfrage durch das die API bereitstellende Netzwerkelement (302) an ein erlaubnisspeicherndes Netzwerkelement (303), wobei die Autorisierungsanfrage eine Kennung der Zielanwendung auf Seiten eines Mobilfunknetzes umfasst,
Empfangen einer Autorisierungsantwort durch das die API bereitstellende Netzwerkelement (302) von dem erlaubnisspeichernden Netzwerkelement (303), wobei die Autorisierungsantwort Erlaubnisse aller Endgeräte umfasst, die der Zielanwendung auf Seiten des Mobilfunknetzes entsprechen, und
Bestimmen des Autorisierungsergebnisses durch das die API bereitstellende Netzwerkelement (302), basierend auf der ersten Kennung des Endgeräts, den Erlaubnissen aller Endgeräte, die der Zielanwendung auf Seiten des Mobilfunknetzes entsprechen, und Verarbeitungsangabeinformationen, welche die Verarbeitung der Informationen des Endgeräts angeben.

4. Verfahren nach Anspruch 1, wobei das Erzielen eines Autorisierungsergebnisses durch das die API bereitstellende Netzwerkelement (302), basierend auf der ersten Kennung des Endgeräts und der Kennung der Zielanwendung auf Seiten des Anwendungsservers, Folgendes umfasst:
Senden einer Autorisierungsanfrage durch das die API bereitstellende Netzwerkelement (302) an ein erlaubnisspeicherndes Netzwerkelement (303), wobei die Autorisierungsanfrage eine zweite Kennung des Endgeräts und eine Kennung der Zielanwendung auf Seiten eines Mobilfunknetzes umfasst,
Empfangen einer Autorisierungsantwort durch das die API bereitstellende Netzwerkelement (302) von dem erlaubnisspeichernden Netzwerkelement (303), wobei die Autorisierungsantwort eine Erlaubnis der Zielanwendung des Endgeräts auf Seiten des Mobilfunknetzes umfasst, und
Bestimmen des Autorisierungsergebnisses durch das die API bereitstellende Netzwerkelement (302), basierend auf der Erlaubnis der Zielanwendung des Endgeräts auf Seiten des Mobilfunknetzes und auf Verarbeitungsangabeinformationen, welche die Verarbeitung der Informationen des Endgeräts angeben.

5. Verfahren nach einem der Ansprüche 1 bis 4, wobei das die API bereitstellende Netzwerkelement eine API-Aufrufantwort an den Anwendungsserver (301) sendet (403), wenn es dem Anwendungsserver (301) gestattet ist, die Verarbeitung der Informationen des Endgeräts durchzuführen, wobei die API-Aufrufantwort angibt, dass die API-Aufrufanfrage erfolgreich durchgeführt wurde.

6. Verfahren nach einem der Ansprüche 1 bis 4, wobei das die API bereitstellende Netzwerkelement eine API-Aufrufantwort an den Anwendungsserver (301) sendet (403), wenn es dem Anwendungsserver (301) nicht gestattet ist, die Verarbeitung der Informationen des Endgeräts durchzuführen, wobei die API-Aufrufantwort angibt, dass die API-Aufrufanfrage zurückgewiesen wird.

7. Verfahren nach Anspruch 6, wobei die API-Aufrufantwort einen Zurückweisungsgrund umfasst und der Zurückweisungsgrund angibt, dass die Autorisierung der durch den Anwendungsserver (301) angefragten Verarbeitung misslungen ist.

8. Verfahren nach einem der Ansprüche 1 bis 7, wobei das Verfahren ferner Folgendes umfasst:
Senden (803) einer Erlaubnisanfragenachricht durch das die API bereitstellende Netzwerkelement (302) an ein Netzwerkelement für Zugriffs- und Mobilitätsverwaltungsfunktionen, wobei die Erlaubnisanfragenachricht die zweite Kennung des Endgeräts und die Kennung der Zielanwendung auf Seiten des Mobilfunknetzes umfasst,
Empfangen einer Erlaubnisantwortnachricht durch das die API bereitstellende Netzwerkelement (302) von dem Netzwerkelement für Zugriffs- und Mobilitätsverwaltungsfunktionen, wobei die Erlaubnisantwortnachricht die Erlaubnis der Zielanwendung des Endgeräts auf Seiten des Mobilfunknetzes umfasst, und
Bestimmen (808) durch das die API bereitstellende Netzwerkelement (302), ob es dem Anwendungsserver (301) gestattet werden soll, die Verarbeitung der Informationen des Endgeräts durchzuführen, basierend auf der Erlaubnis der Zielanwendung des Endgeräts auf Seiten des Mobilfunknetzes und den Verarbeitungsangabeinformationen, wobei die Verarbeitungsangabeinformationen die Verarbeitung der Informationen des Endgeräts angeben.

9. Verfahren zum Aufrufen einer API, Folgendes umfassend:
Empfangen einer Autorisierungsanfrage von einem eine API bereitstellenden Netzwerkelement (302) durch ein erlaubnisspeicherndes Netzwerkelement (303), wobei die Autorisierungsanfrage eine zweite Kennung eines Endgeräts, eine Kennung einer Zielanwendung auf Seiten eines Mobilfunknetzes und Verarbeitungsangabeinformationen, die eine Verarbeitung von Informationen des Endgeräts angeben, umfasst,
Erzielen eines Autorisierungsergebnisses durch das erlaubnisspeichernde Netzwerkelement (303), basierend auf der zweiten Kennung des Endgeräts und der Kennung der Zielanwendung auf Seiten des Mobilfunknetzes, den Verarbeitungsangabeinformationen und Speichererlaubnisinformationen, wobei das Autorisierungsergebnis angibt, ob es gestattet ist, die Informationen des Endgeräts zu verarbeiten, und die Speichererlaubnisinformationen eine Erlaubnis der Zielanwendung des Endgeräts auf Seiten des Mobilfunknetzes umfassen,
Senden einer Autorisierungsantwort durch das erlaubnisspeichernde Netzwerkelement (303) an das die API bereitstellende Netzwerkelement (302), wobei die Autorisierungsantwort das Autorisierungsergebnis umfasst, und
Empfangen (503) einer Abonnementaktualisierungsnachricht durch das erlaubnis speichernde Netzwerkelement (303), wobei die Abonnementaktualisierungsnachricht die zweite Kennung des Endgeräts und die Kennung der Zielanwendung auf Seiten des Mobilfunknetzes und die Erlaubnis der Zielanwendung auf Seiten des Mobilfunknetzes umfasst, und
Speichern der zweiten Kennung des Endgeräts und der Kennung der Zielanwendung auf Seiten des Mobilfunknetzes und der Erlaubnis der Zielanwendung auf Seiten des Mobilfunknetzes in die Speichererlaubnisinformationen durch das erlaubnisspeichernde Netzwerkelement (303).

10. Verfahren nach Anspruch 9, wobei die Abonnementaktualisierungsnachricht ferner Erlaubnisangabeinformationen umfasst, die eine Aktualisierung einer Netzwerkerlaubnis des Endgeräts angeben, und
das Speichern der zweiten Kennung des Endgeräts und der Kennung der Zielanwendung auf Seiten des Mobilfunknetzes und der Erlaubnis der Zielanwendung auf Seiten des Mobilfunknetzes in die Speichererlaubnisinformationen durch das erlaubnisspeichernde Netzwerkelement (303) Folgendes umfasst:
Speichern der zweiten Kennung des Endgeräts und der Kennung der Zielanwendung auf Seiten des Mobilfunknetzes und der Erlaubnis der Zielanwendung auf Seiten des Mobilfunknetzes in die Speichererlaubnisinformationen durch das erlaubnisspeichernde Netzwerkelement (303), basierend auf den Erlaubnisangabeinformationen.

11. Verfahren zum Aufrufen einer API, Folgendes umfassend:
Senden (701) einer API-Aufrufanfrage für eine Zielanwendung durch einen Anwendungsserver (301) an ein eine API bereitstellendes Netzwerkelement (302), wobei die API-Aufrufanfrage zum Anfragen vorgesehen ist, Informationen eines Endgeräts zu verarbeiten, und die API-Aufrufanfrage eine erste Kennung des Endgeräts und eine Kennung der Zielanwendung auf Seiten des Anwendungsservers umfasst,
Erzielen eines Autorisierungsergebnisses oder der Erlaubnis der Zielanwendung des Endgeräts auf Seiten des Mobilfunknetzes durch das die API bereitstellende Netzwerkelement (302), basierend auf der ersten Kennung des Endgeräts und der Kennung der Zielanwendung auf Seiten des Anwendungsservers von einem erlaubnisspeichernden Netzwerkelement (303), wobei es dem erlaubnisspeichernden Netzwerkelement (303) nicht gelingt (702), die Erlaubnis der Zielanwendung des Endgeräts auf Seiten des Mobilfunknetzes aufzufinden, und
Empfangen (710) einer API-Aufrufantwort von dem die API bereitstellenden Netzwerkelement (302) durch den Anwendungsserver (301), wobei die API-Aufrufantwort angibt, dass die API-Aufrufantwort erfolgreich durchgeführt oder zurückgewiesen wird, wobei die API-Aufrufantwort einen Zurückweisungsgrund umfasst, wenn die API-Aufrufantwort angibt, dass die API-Aufrufanfrage zurückgewiesen wird, und der Zurückweisungsgrund angibt, dass die Autorisierung der durch den Anwendungsserver (301) angefragten Verarbeitung misslungen ist.

12. Anwendungsprogrammierungsschnittstelle, API, bereitstellendes Netzwerkelement (302, 1000), Mittel zum Ausführen der Schritte nach einem der Ansprüche 1 bis 8 umfassend.

13. Erlaubnisspeicherndes Netzwerkelement (303, 1000), Mittel zum Ausführen der Schritte nach einem der Ansprüche 9 bis 10 umfassend.

## Revendications

1. Procédé d'appel d'une API, comprenant :
la réception (401), par un élément de réseau de fourniture d'une interface de programmation d'application, API (302), d'une demande d'appel d'API pour une application cible depuis un serveur d'application (301), dans lequel la demande d'appel d'API est destinée à demander d'effectuer une opération sur des informations d'un dispositif terminal, et la demande d'appel d'API comprend un premier identifiant du dispositif terminal et un identifiant de l'application cible sur le côté serveur d'application ;
l'obtention, par l'élément de réseau de fourniture d'API (302), d'un résultat d'autorisation sur la base du premier identifiant du dispositif terminal et de l'identifiant de l'application cible sur le côté serveur d'application, dans lequel le résultat d'autorisation indique si le serveur d'application (301) est autorisé ou non à effectuer une opération sur les informations du dispositif terminal ;
la détermination (402), par l'élément de réseau de fourniture d'API (302) sur la base du résultat d'autorisation, du fait qu'il faut autoriser ou non le serveur d'application (301) à effectuer une opération sur les informations du dispositif terminal ; et
dans lequel l'obtention, par l'élément de réseau de fourniture d'API (302), d'un résultat d'autorisation sur la base du premier identifiant du dispositif terminal et de l'identifiant de l'application cible sur le côté serveur d'application comprend :
l'envoi, par l'élément de réseau de fourniture d'API (302), d'une demande d'autorisation à un élément de réseau de stockage de permission (303), dans lequel la demande d'autorisation comprend un second identifiant du dispositif terminal et un identifiant de l'application cible sur un côté réseau mobile, et des informations d'indication d'opération indiquant l'opération sur les informations du dispositif terminal ; et
la réception, par l'élément de réseau de fourniture d'API (302), d'une réponse d'autorisation depuis l'élément de réseau de stockage de permission (303), dans lequel la réponse d'autorisation comprend le résultat d'autorisation.

2. Procédé selon la revendication 1, dans lequel l'obtention, par l'élément de réseau de fourniture d'API (302), d'un résultat d'autorisation sur la base du premier identifiant du dispositif terminal et de l'identifiant de l'application cible sur le côté serveur d'application comprend :
l'envoi, par l'élément de réseau de fourniture d'API (302), d'une demande d'autorisation à un élément de réseau de stockage de permission (303), dans lequel la demande d'autorisation comprend un second identifiant du dispositif terminal ;
la réception, par l'élément de réseau de fourniture d'API (302), d'une réponse d'autorisation depuis l'élément de réseau de stockage de permission (303), dans lequel la réponse d'autorisation comprend des permissions de toutes les applications correspondant au dispositif terminal sur un côté réseau mobile ; et
la détermination, par l'élément de réseau de fourniture d'API (302), du résultat d'autorisation sur la base de l'identifiant de l'application cible sur le côté serveur d'application, des permissions de toutes les applications correspondant au dispositif terminal sur le côté réseau mobile, et des informations d'indication d'opération indiquant l'opération sur les informations du dispositif terminal.

3. Procédé selon la revendication 1, dans lequel l'obtention, par l'élément de réseau de fourniture d'API (302), d'un résultat d'autorisation sur la base du premier identifiant du dispositif terminal et de l'identifiant de l'application cible sur le côté serveur d'application comprend :
l'envoi, par l'élément de réseau de fourniture d'API (302), d'une demande d'autorisation à un élément de réseau de stockage de permission (303), dans lequel la demande d'autorisation comprend un identifiant de l'application cible sur un côté réseau mobile ;
la réception, par l'élément de réseau de fourniture d'API (302), d'une réponse d'autorisation depuis l'élément de réseau de stockage de permission (303), dans lequel la réponse d'autorisation comprend des permissions de tous les dispositifs terminaux correspondant à l'application cible sur le côté réseau mobile ; et
la détermination, par l'élément de réseau de fourniture d'API (302), du résultat d'autorisation sur la base du premier identifiant du dispositif terminal, des permissions de tous les dispositifs terminaux correspondant à l'application cible sur le côté réseau mobile, et des informations d'indication d'opération indiquant l'opération sur les informations du dispositif terminal.

4. Procédé selon la revendication 1, dans lequel l'obtention, par l'élément de réseau de fourniture d'API (302), d'un résultat d'autorisation sur la base du premier identifiant du dispositif terminal et de l'identifiant de l'application cible sur le côté serveur d'application comprend :
l'envoi, par l'élément de réseau de fourniture d'API (302), d'une demande d'autorisation à un élément de réseau de stockage de permission (303), dans lequel la demande d'autorisation comprend un second identifiant du dispositif terminal et un identifiant de l'application cible sur un côté réseau mobile ;
la réception, par l'élément de réseau de fourniture d'API (302), d'une réponse d'autorisation depuis l'élément de réseau de stockage de permission (303), dans lequel la réponse d'autorisation comprend une permission de l'application cible du dispositif terminal sur le côté réseau mobile ; et
la détermination, par l'élément de réseau de fourniture d'API (302), du résultat d'autorisation sur la base de la permission de l'application cible du dispositif terminal sur le côté réseau mobile et des informations d'indication d'opération indiquant l'opération sur les informations du dispositif terminal.

5. Procédé selon l'une quelconque des revendications 1 à 4, dans lequel lorsque le serveur d'application (301) est autorisé à effectuer l'opération sur les informations du dispositif terminal, l'élément de réseau de fourniture d'API envoie (403) une réponse d'appel d'API au serveur d'application (301), dans lequel la réponse d'appel d'API indique que la demande d'appel d'API est effectuée avec succès.

6. Procédé selon l'une quelconque des revendications 1 à 4, dans lequel lorsque le serveur d'application (301) est interdit d'effectuer l'opération sur les informations du dispositif terminal, l'élément de réseau de fourniture d'API envoie (403) une réponse d'appel d'API au serveur d'application (301), dans lequel la réponse d'appel d'API indique que la demande d'appel d'API est rejetée.

7. Procédé selon la revendication 6, dans lequel la réponse d'appel d'API comprend une cause de rejet, et la cause de rejet indique que l'autorisation de l'opération demandée par le serveur d'application (301) a échoué.

8. Procédé selon l'une quelconque des revendications 1 à 7, dans lequel le procédé comprend en outre :
l'envoi (803), par l'élément de réseau de fourniture d'API (302), d'un message de demande de permission à un élément de réseau de fonction de gestion d'accès et de mobilité, dans lequel le message de demande de permission comprend le second identifiant du dispositif terminal et l'identifiant de l'application cible sur le côté réseau mobile ;
la réception, par l'élément de réseau de fourniture d'API (302), d'un message de réponse de permission depuis l'élément de réseau de fonction de gestion d'accès et de mobilité, dans lequel le message de réponse de permission comprend la permission de l'application cible du dispositif terminal sur le côté réseau mobile ; et
la détermination (808), par l'élément de réseau de fourniture d'API (302) sur la base de la permission de l'application cible du dispositif terminal sur le côté réseau mobile et des informations d'indication d'opération, du fait qu'il faut autoriser ou non le serveur d'application (301) à effectuer l'opération sur les informations du dispositif terminal, dans lequel les informations d'indication d'opération indiquent l'opération sur les informations du dispositif terminal.

9. Procédé d'appel d'une API, comprenant :
la réception, par un élément de réseau de stockage de permission (303), d'une demande d'autorisation depuis un élément de réseau de fourniture d'API (302), dans lequel la demande d'autorisation comprend un second identifiant d'un dispositif terminal, un identifiant d'une application cible sur un côté réseau mobile, et des informations d'indication d'opération indiquant une opération sur des informations du dispositif terminal ;
l'obtention, par l'élément de réseau de stockage de permission (303), d'un résultat d'autorisation sur la base du second identifiant du dispositif terminal et de l'identifiant de l'application cible sur le côté réseau mobile, des informations d'indication d'opération et d'informations de permission de stockage, dans lequel le résultat d'autorisation indique si l'opération sur les informations du dispositif terminal est autorisée ou non, et les informations de permission de stockage comprennent une permission de l'application cible du dispositif terminal sur le côté réseau mobile ;
l'envoi, par l'élément de réseau de stockage de permission (303), d'une réponse d'autorisation à l'élément de réseau de fourniture d'API (302), dans lequel la réponse d'autorisation comprend le résultat d'autorisation ; et
la réception (503), par l'élément de réseau de stockage de permission (303), d'un message de mise à jour d'abonnement, dans lequel le message de mise à jour d'abonnement comprend le second identifiant du dispositif terminal et l'identifiant de l'application cible sur le côté réseau mobile, et la permission de l'application cible sur le côté réseau mobile ; et
le stockage, par l'élément de réseau de stockage de permission (303), du second identifiant du dispositif terminal et de l'identifiant de l'application cible sur le côté réseau mobile, et de la permission de l'application cible sur le côté réseau mobile dans les informations de permission de stockage.

10. Procédé selon la revendication 9, dans lequel le message de mise à jour d'abonnement comprend en outre des informations d'indication de permission indiquant la mise à jour d'une permission de réseau du dispositif terminal ; et
le stockage, par l'élément de réseau de stockage de permission (303), du second identifiant du dispositif terminal et de l'identifiant de l'application cible sur le côté réseau mobile, et de la permission de l'application cible sur le côté réseau mobile dans les informations de permission de stockage comprend :
le stockage, par l'élément de réseau de stockage de permission (303), du second identifiant du dispositif terminal et de l'identifiant de l'application cible sur le côté réseau mobile, et de la permission de l'application cible sur le côté réseau mobile dans les informations de permission de stockage sur la base des informations d'indication de permission.

11. Procédé d'appel d'une API, comprenant :
l'envoi (701), par un serveur d'application (301), d'une demande d'appel d'API pour une application cible à un élément de réseau de fourniture d'API (302), dans lequel la demande d'appel d'API est destinée à demander d'effectuer une opération sur des informations d'un dispositif terminal, et la demande d'appel d'API comprend un premier identifiant du dispositif terminal et un identifiant de l'application cible sur le côté serveur d'application ;
l'obtention, par l'élément de réseau de fourniture d'API (302), d'un résultat d'autorisation ou de la permission de l'application cible du dispositif terminal sur le côté réseau mobile sur la base du premier identifiant du dispositif terminal et de l'identifiant de l'application cible sur le côté serveur d'application depuis un élément de réseau de stockage de permission (303) ; dans lequel l'élément de réseau de stockage de permission (303) échoue (702) à trouver la permission de l'application cible du dispositif terminal sur le côté réseau mobile ; et
la réception (710), par le serveur d'application (301), d'une réponse d'appel d'API depuis l'élément de réseau de fourniture d'API (302), dans lequel la réponse d'appel d'API indique que la demande d'appel d'API est effectuée avec succès ou rejetée ; dans lequel lorsque la réponse d'appel d'API indique que la demande d'appel d'API est rejetée, la réponse d'appel d'API comprend une cause de rejet, et la cause de rejet indique que l'autorisation de l'opération demandée par le serveur d'application (301) a échoué.

12. Élément de réseau de fourniture d'interface de programmation d'application, API (302, 1000), comprenant des moyens pour exécuter les étapes selon l'une quelconque des revendications 1 à 8.

13. Élément de réseau de stockage de permission (303, 1000), comprenant des moyens pour exécuter les étapes selon l'une quelconque des revendications 9 et 10.
